(19) Europäisches Patentamt / European Patent Office / Office européen des brevets

(11) **EP 3 533 807 B1**

(12) **EUROPEAN PATENT SPECIFICATION**

(45) Date of publication and mention of the grant of the patent:
**15.03.2023 Bulletin 2023/11**

(21) Application number: **17865850.6**

(22) Date of filing: **30.10.2017**

(51) International Patent Classification (IPC):
**C08F 220/18** *(2006.01)*    **C08L 33/08** *(2006.01)*
**C08F 2/26** *(2006.01)*    **C08F 6/22** *(2006.01)*
**C08F 2/30** *(2006.01)*

(52) Cooperative Patent Classification (CPC):
(C-Sets available)
**C08F 2/26; C08F 2/30; C08F 6/22; C08F 220/18**

(Cont.)

(86) International application number:
**PCT/JP2017/039179**

(87) International publication number:
**WO 2018/079785 (03.05.2018 Gazette 2018/18)**

(54) **METHOD FOR PRODUCING ACRYLIC RUBBER**

VERFAHREN ZUR HERSTELLUNG VON ACRYLKAUTSCHUK

PROCÉDÉ DE FABRICATION DE CAOUTCHOUC ACRYLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2016 JP 2016213493**
        **27.01.2017 JP 2017013291**

(43) Date of publication of application:
**04.09.2019 Bulletin 2019/36**

(73) Proprietor: **Zeon Corporation**
**Tokyo 100-8246 (JP)**

(72) Inventors:
• **SATO, Susumu**
 **Tokyo 100-8246 (JP)**
• **MASUDA, Hirofumi**
 **Tokyo 100-8246 (JP)**

(74) Representative: **Maiwald GmbH**
**Elisenhof**
**Elisenstraße 3**
**80335 München (DE)**

(56) References cited:
    EP-A1- 1 533 326     EP-A1- 2 530 119
    JP-A- H02 212 574     JP-A- S61 136 501
    JP-A- 2007 056 081     JP-A- 2010 126 576
    JP-A- 2010 275 496     JP-A- 2014 050 818
    JP-B1- S 285 039

• DATABASE WPI Week 200723 Thomson Scientific, London, GB; AN 2007-227526 XP002798285, & KR 100 623 009 B1 (CHEIL IND INC) 13 September 2006 (2006-09-13)
• TAKAOKA, TSUNEO: "Syntheti rubber and the production method thereof (11th) Acryli rubber and the production method thereof, "3.2 Emulsio Polymerization", particularly, "3.3 Salting-out", "6 Vulcanization", Journal of the Society of Rubbe Industry, vol. 45, no. 9, 1972, pages 817.75-820.78, XP009514522, Japan ISSN: 0029-022X, DOI: 10.2324/gomu.45.817
• TATEMICHI, HIDEMARO: "Recent trends of acrylic rubber", Kobunshi = High polymers,19600101Nihon Kobunshi Gakkai, JP, vol. 9, no. 9, 1960, pages 774-777, XP009515047, Japan DOI: 10.1295/kobunshi.9.774
• MOTOYAMA, TAKAHIKO: "Surfactants and emulsion polymerization", Japan Oil Chemists' Society, vol. 18, 1969, pages 158-165, XP009515044,

• KUNISAWA, SHINTARO et al.: "Compounding chemicals for latex (II) Chemicals primarily acting on aqueous phase", Journal of the Society of Rubber Industry, vol. 46, no. 12, 1973, pages 1002.64-1008.70, XP009515046, Japan DOI: 10.2324/gomu.46.1002
• SUGIYAMA, MANABU: "Industrial synthetic method of the rubbers 6. Acrylic rubber", Journal of the Society of Rubber Industry, vol. 89, no. 1, 1 January 2016 (2016-01-01), pages 10-15, XP055599224, Japan

(52) Cooperative Patent Classification (CPC): (Cont.)

C-Sets
C08F 6/22, C08L 33/08;
C08F 220/1802, C08F 220/1804, C08F 222/16;
C08F 220/1804, C08F 220/1802, C08F 222/16

**Description**

TECHNICAL FIELD

The present invention relates to a method for producing an acrylic rubber, and more specifically relates to a method for producing an acrylic rubber which can appropriately reduce fouling of a polymerization apparatus during polymerization, and can effectively prevent mutual adhesion between hydrous crumbs.

BACKGROUND ART

Acrylic rubber, which is a group of polymers comprising an acrylic acid ester as a main ingredient, is generally known as a type of rubber having high heat resistance, oil resistance, and ozone resistance, and is widely used in automobile-related fields.

Such an acrylic rubber is usually produced as follows: A mixture of monomers for forming the acrylic rubber is emulsion polymerized. A coagulant is then added to the resulting polymer emulsion to cause coagulation, and hydrous crumbs produced by the coagulation are dried (for example, see Patent Documents 1 to 4, as well as Non-Patent Documents 1 and 2) .

In traditional acrylic rubbers such as the acrylic rubber according to Patent Document 1, hydrous crumbs after the coagulation may adhere to each other in some cases. such adhesion, if occurring between the hydrous crumbs, causes problems that the efficiency of washing after the coagulation may be reduced, or the drying time to dry the hydrous should be increased so that the productivity may be reduced.

PRIOR ART DOCUMENTS

PATENT DOCUMENTS

[0005]

　　　Patent Document 1: JP-A H07-145291
　　　Patent Document 2: JP-A H02-212574
　　　Patent Document 3: JP-A 2010-126576
　　　Patent Document 4: KR-B 10-0623009

NON-PATENT DOCUMENTS

[0006]

　　　Non-Patent Document 1: T. Takaoka, "Synthetic rubber and the production method thereof (11th)", J. of SRIJ, 1972, Vol. 45, No. 9, pp. 817-820
　　　Non-Patent Document 2: H. Tatemichi, "Recent trends of acrylic rubber", Macromolecules, 1960, Vol.9, No.9, p. 774-777

SUMMARY OF THE INVENTIONs

PROBLEM TO BE SOLVED BY THE INVENTION

The present invention has been made in consideration of such circumstances. An object of the present invention is to provide a method for producing an acrylic rubber which can appropriately reduce fouling of a polymerization apparatus during polymerization, and can effectively prevent mutual adhesion between hydrous crumbs.

MEANS FOR SOLVING THE PROBLEMS

As a result of extensive research to achieve the object above, the present inventors have found that the object can be achieved by emulsion polymerizing monomers for forming an acrylic rubber in the presence of a nonionic emulsifier and an anionic emulsifier during the emulsion polymerization, and thus have completed the present invention.

That is, the present invention provides a method for producing an acrylic rubber comprising: an emulsion polymerization step of emulsion polymerizing monomers for forming the acrylic rubber in the presence of a nonionic emulsifier and an anionic emulsifier to prepare a polymer emulsion; and a coagulation step of coagulating the polymer emulsion through addition of a coagulant to the polymer emulsion to yield hydrous crumbs, wherein the emulsion polymerization reaction is performed while a monomer emulsion prepared by mixing the monomers for forming the acrylic rubber with the nonionic emulsifier, the anionic emulsifier and water is being continuously added dropwise to the polymerization reaction system from the start of the polymerization reaction to any time, and the amount of water to be used in the monomer emulsion is 10 to 70 parts by weight relative to 100 parts by weight of the monomers for forming the acrylic rubber.

In the production method according to the present invention, the nonionic emulsifier is preferably a polyoxyethylene alkyl ether or a polyethylene oxide-polypropylene oxide copolymer.

In the production method according to the present invention, the anionic emulsifier is preferably a higher alcohol sulfate salt or sodium lauryl sulfate.

In the production method according to the present invention, the amount of the nonionic emulsifier to be used is preferably more than 0 parts by weight and 4 parts by weight or less, more preferably 0.7 to 1.7 parts by weight relative to 100 parts by weight of the monomers for forming the acrylic rubber.

In the production method according to the present invention, the amount of the anionic emulsifier to be used is preferably more than 0 parts by weight and 4 parts by weight or less, more preferably 0.35 to 0.75 parts by weight relative to 100 parts by weight of the monomers for forming the acrylic rubber.

In the production method according to the present invention, the amounts of the nonionic emulsifier and anionic emulsifier to be used are controlled such that the weight ratio of nonionic emulsifier/anionic emulsifier is preferably 10/90 to 80/20, more preferably 50/50 to 75/25.

In the production method according to the present invention, the coagulant is preferably magnesium sulfate or sodium sulfate.

In the production method according to the present invention, the coagulation temperature in the coagulation step is preferably 78 to 90°C.

In the production method according to the present invention, the emulsion polymerization reaction is preferably performed in the emulsion polymerization step while the monomer emulsion, a polymerization initiator, and a reducing agent are being continuously added dropwise to a polymerization reaction system from the start of the polymerization reaction to any time.

Moreover, the present invention provides a method for producing an acrylic rubber composition, comprising: a step of compounding a cross-linking agent with the acrylic rubber produced by the production method above.

Furthermore, the present invention provides a method for producing a cross-linked rubber, comprising: a step of cross-linking the acrylic rubber composition prepared by the production method.

EFFECTS OF THE INVENTION

The present invention provides a method for producing an acrylic rubber which can appropriately reduce fouling of a polymerization apparatus during polymerization, and can effectively prevent mutual adhesion between hydrous crumbs.

DESCRIPTION OF EMBODIMENTS

<Acrylic rubber>

First, the acrylic rubber produced by the production method according to the present invention will be described.

The acrylic rubber produced by the production method according to the present invention refers to a rubbery polymer comprising a (meth)acrylic acid ester monomer (which means an acrylic acid ester monomer and/or a methacrylic acid ester monomer. Hereinafter, the same holds for methyl (meth)acrylate, and others) unit as a main ingredient (which refers to an ingredient occupying 50 wt% or more of the total monomer units in the rubber in the present invention) in the molecule.

Examples of the (meth)acrylic acid ester monomer forming the (meth)acrylic acid ester monomer unit as the main ingredient of the acrylic rubber produced by the production method according to the present invention include, but should not be limited to, alkyl (meth)acrylate monomers, and alkoxyalkyl (meth)acrylate monomers.

Any alkyl (meth)acrylate monomer can be used without limitation, and (meth)acrylic acid esters of $C_1$ to $C_8$ alkanols are preferred. Specifically, examples thereof include methyl (meth)acrylate, ethyl (meth)acrylate, n-propyl (meth)acrylate, isopropyl (meth)acrylate, n-butyl (meth)acrylate, isobutyl (meth)acrylate, n-hexyl (meth)acrylate, 2-ethylhexyl (meth)acrylate, cyclohexyl (meth)acrylate, and the like. Among these monomers, ethyl (meth)acrylate and n-butyl (meth)acrylate are preferred, and ethyl acrylate and n-butyl acrylate are particularly preferred. These monomers can be used alone or in combination.

Any alkoxyalkyl (meth)acrylate monomer can be used without limitation, and (meth)acrylic acid esters of $C_2$ to

$C_8$ alkoxyalkyl alcohols are preferred. Specifically, examples thereof include methoxymethyl (meth)acrylate, ethoxymethyl (meth)acrylate, 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth)acrylate, 4-methoxybutyl (meth)acrylate, and the like. Among these monomers, 2-ethoxyethyl (meth)acrylate and 2-methoxyethyl (meth)acrylate are preferred, and 2-ethoxyethyl acrylate and 2-methoxyethyl acrylate are particularly preferred. These monomers can be used alone or in combination.

The content of the (meth)acrylic acid ester monomer unit in the acrylic rubber produced by the production method according to the present invention is usually 50 to 99.9 wt%, preferably 60 to 99.5 wt%, more preferably 70 to 99.5 wt%. An excessively small content of the (meth)acrylic acid ester monomer unit may result in a cross-linked rubber having reduced weatherability, heat resistance, and oil resistance. In contrast, an excessively large content thereof may result in a cross-linked rubber having reduced heat resistance.

The acrylic rubber produced by the production method according to the present invention preferably comprises 30 to 100 wt% of the alkyl (meth)acrylate monomer unit and 70 to 0 wt% of the alkoxyalkyl (meth)acrylate monomer unit as the (meth)acrylic acid ester monomer unit.

Besides the alkyl (meth)acrylate monomer unit, the acrylic rubber produced by the production method according to the present invention may comprise a cross-linkable monomer unit as needed. Any cross-linkable monomer for forming the cross-linkable monomer unit can be used without limitation. Examples thereof include α,β-ethylenically unsaturated carboxylic acid monomers; monomers having an epoxy group; monomers having halogen atoms; diene monomers; and the like.

Any α,β-ethylenically unsaturated carboxylic acid monomer for forming an α,β-ethylenically unsaturated carboxylic acid monomer unit can be used without limitation. Examples thereof include $C_3$ to $C_{12}$ α,β-ethylenically unsaturated monocarboxylic acids, $C_4$ to $C_{12}$ α,β-ethylenically unsaturated dicarboxylic acids, $C_4$ to $C_{12}$ α,β-ethylenically unsaturated dicarboxylic acid monoesters of $C_1$ to $C_8$ alkanols, and the like. If such an α,β-ethylenically unsaturated carboxylic acid monomer is used, the acrylic rubber can be obtained as a carboxyl group-containing acrylic rubber having a carboxyl group as a cross-linking point, which, in turn, results in a cross-linked rubber having further enhanced compression set resistance.

Specific examples of the $C_3$ to $C_{12}$ α,β-ethylenically unsaturated monocarboxylic acids include acrylic acid, methacrylic acid, α-ethylacrylic acid, crotonic acid, cinnamic acid, and the like.

Specific examples of the $C_4$ to $C_{12}$ α,β-ethylenically unsaturated dicarboxylic acids include butenedioic acids such as fumaric acid and maleic acid; itaconic acid; citraconic acid; and chloromaleic acid; and the like.

Specific examples of the $C_4$ to $C_{12}$ α,β-ethylenically unsaturated dicarboxylic acid monoesters of $C_1$ to $C_8$ alkanols include mono-linear alkyl esters of butenedioic acid such as monomethyl fumarate, monoethyl fumarate, mono-n-butyl fumarate, monomethyl maleate, monoethyl maleate, and mono-n-butyl maleate; butenedioic acid monoesters having an alicyclic structure such as monocyclopentyl fumarate, monocyclohexyl fumarate, monocyclohexenyl fumarate, monocyclopentyl maleate, monocyclohexyl maleate, and monocyclohexenyl maleate; itaconic acid monoesters such as monomethyl itaconate, monoethyl itaconate, mono-n-butyl itaconate, and monocyclohexyl itaconate; and the like.

Among these monoesters, preferred are $C_4$ to $C_{12}$ α,β-ethylenically unsaturated dicarboxylic acid monoesters of $C_1$ to $C_8$ alkanols. More preferred are mono-linear alkyl esters of butenedioic acid or butenedioic acid monoesters having an alicyclic structure. Still more preferred are mono-n-butyl fumarate, mono-n-butyl maleate, monocyclohexyl fumarate, and monocyclohexyl maleate. Particularly preferred is mono-n-butyl fumarate. These α,β-ethylenically unsaturated carboxylic acid monomers can be used alone or in combination. Among these monomers listed above, the dicarboxylic acids include those present as anhydrides thereof.

Any monomer having an epoxy group can be used without limitation. Examples thereof include epoxy group-containing (meth)acrylic acid esters such as glycidyl (meth)acrylate; and epoxy group-containing ethers such as allyl glycidyl ether and vinyl glycidyl ether; and the like.

Any monomers having halogen atoms can be used without limitation. Examples thereof include unsaturated alcohol esters of halogen-containing saturated carboxylic acids, haloalkyl (meth)acrylates, haloacyloxyalkyl (meth)acrylates, (haloacetylcarbamoyloxy)alkyl (meth)acrylates, halogen-containing unsaturated ethers, halogen-containing unsaturated ketones, halomethyl group-containing aromatic vinyl compounds, halogen-containing unsaturated amides, haloacetyl group-containing unsaturated monomers, and the like.

Specific examples of the unsaturated alcohol esters of halogen-containing saturated carboxylic acids include vinyl chloroacetate, vinyl 2-chloropropionate, allyl chloroacetate, and the like.

Specific examples of the haloalkyl (meth)acrylates include chloromethyl(meth)acrylate, 1-chloroethyl (meth)acrylate, 2-chloroethyl (meth)acrylate, 1,2-dichloroethyl(meth)acrylate, 2-chloropropyl (meth)acrylate, 3-chloropropyl (meth)acrylate, 2,3-dichloropropyl (meth)acrylate, and the like.

Specific examples of the haloacyloxyalkyl (meth)acrylates include 2-(chloroacetoxy)ethyl (meth)acrylate, 2-(chloroacetoxy)propyl (meth)acrylate, 3-(chloroacetoxy)propyl (meth)acrylate, 3-(hydroxychloroacetoxy)propyl (meth)acrylate, and the like.

Specific examples of the (haloacetylcarbamoyloxy)alkyl (meth)acrylates include 2-(chloroacetylcarbamoyloxy)ethyl (meth)acrylate, 3-(chloroacetylcarbamoyloxy)propyl (meth)acrylate, and the like.

Specific examples of the halogen-containing unsaturated ethers include chloromethylvinyl ether, 2-chloroethylvinyl ether, 3-chloropropylvinyl ether, 2-chloroethylallyl ether, 3-chloropropylallyl ether, and the like.

Specific examples of the halogen-containing unsaturated ketones include 2-chloroethylvinyl ketone, 3-chloropropylvinyl ketone, 2-chloroethylallyl ketone, and the like.

Specific examples of the halomethyl group-containing aromatic vinyl compounds include p-chloromethylstyrene, m-chloromethylstyrene, o-chloromethylstyrene, p-chloromethyl-α-methylstyrene, and the like.

Specific examples of halogen-containing unsaturated amides include N-chloromethyl(meth)acrylamide, and the like.

Specific examples of the haloacetyl group-containing unsaturated monomers include 3-(hydroxychloroacetoxy)propyl allyl ether, p-vinylbenzyl chloroacetate, and the like.

Examples of the diene monomers include conjugated diene monomers, and non-conjugated diene monomers.

Specific examples of the conjugated diene monomers include 1,3-butadiene, isoprene, piperylene, and the like.

Specific examples of the non-conjugated diene monomers include ethylidene norbornene, dicyclopentadiene, dicyclopentadienyl (meth)acrylate, 2-dicyclopentadienylethyl (meth)acrylate, and the like.

Among these cross-linkable monomers listed above, if an α,β-ethylenically unsaturated carboxylic acid monomer is used, a carboxyl group-containing acrylic rubber is obtained as the acrylic rubber. If the acrylic rubber is a carboxyl group-containing acrylic rubber, such an acrylic rubber can have favorable oil resistance and heat resistance, and can have improved compression set resistance.

The content of the cross-linkable monomer unit in the acrylic rubber produced by the production method according to the present invention is preferably 0.1 to 10 wt%, more preferably 0.5 to 7 wt%, still more preferably 0.5 to 5 wt%. A content of the cross-linkable monomer unit controlled within such a range can result in a cross-linked rubber having favorable mechanical properties and heat resistance as well as appropriately enhanced compression set resistance.

Besides the (meth)acrylic acid ester monomer unit, and the cross-linkable monomer unit used as needed, the acrylic rubber produced by the production method according to the present invention may also include a unit of an additional copolymerizable monomer. Examples of such an additional copolymerizable monomer include aromatic vinyl monomers, α,β-ethylenically unsaturated nitrile monomers, acrylamide monomers, other olefin monomers, and the like.

Examples of the aromatic vinyl monomers include styrene, α-methylstyrene, divinylbenzene, and the like.

Examples of the α,β-ethylenically unsaturated nitrile monomers include acrylonitrile, methacrylonitrile, and the like.

Examples of the acrylamide monomers include acrylamide, methacrylamide, and the like.

Examples of the other olefin monomers include ethylene, propylene, vinyl chloride, vinylidene chloride, vinyl acetate, ethyl vinyl ether, butyl vinyl ether, and the like.

Among these additional copolymerizable monomers, preferred are styrene, acrylonitrile, methacrylonitrile, ethylene, and vinyl acetate. More preferred are acrylonitrile, methacrylonitrile, and ethylene.

These additional copolymerizable monomers can be used alone or in combination. The content of the unit of the additional copolymerizable monomer in the acrylic rubber according to the present invention is usually 49.9 wt% or less, preferably 39.5 wt% or less, more preferably 29.5 wt% or less.

<Method for producing acrylic rubber>

The method for producing an acrylic rubber according to the present invention will now be described.

The method for producing an acrylic rubber according to the present invention comprises:

an emulsion polymerization step of emulsion polymerizing monomers for forming the acrylic rubber in the presence of a nonionic emulsifier and an anionic emulsifier to prepare a polymer emulsion; and
a coagulation step of coagulating the polymer emulsion through addition of an coagulant to the polymer emulsion to yield hydrous crumbs, wherein
the emulsion polymerization reaction is performed while a monomer emulsion prepared by mixing the monomers for forming the acrylic rubber with the nonionic emulsifier, the anionic emulsifier and water is being continuously added dropwise to the polymerization reaction system from the start of polymerization reaction to any time, and the amount of water to be used in the monomer emulsion is 10 to 70 parts by weight relative to 100 parts by weight of the monomers for forming the acrylic rubber.

<Emulsion polymerization step>

The emulsion polymerization step in the production method according to the present invention is a step of emulsion polymerizing monomers for forming the acrylic rubber in the presence of a nonionic emulsifier and an anionic emulsifier to prepare a polymer emulsion.

According to the production method according to the present invention, use of a combination of a nonionic emulsifier and an anionic emulsifier can effectively reduce fouling caused by aggregates, which are generated through polymerization and adhere to a polymerization apparatus (such as a polymerization tank) during emulsion polymerization, and can effectively prevent mutual adhesion between hydrous crumbs yielded through the coagulation. In particular, the production method according to the present invention can effectively prevent the mutual adhesion between hydrous crumbs by use of a nonionic emulsifier and an anionic emulsifier in combination. Such adhesion between the hydrous crumbs, if occurring, causes problems that the efficiency of washing after the coagulation may be reduced, or the drying time of the hydrous crumbs should be increased so that the productivity may be reduced. In contrast, the production method according to the present invention can effectively prevent such adhesion between hydrous crumbs.

Examples of the nonionic emulsifier include polyoxyethylene alkyl ethers such as polyoxyethylene dodecyl ether; polyoxyethylene alkylphenol ethers such as polyethylene oxide nonylphenol; polyoxyethylene alkyl esters such as polyoxyethylene stearate; polyoxyethylene sorbitan alkyl esters; polyethylene oxide-polypropylene oxide copolymers such as polyethylene oxide-polypropylene oxide glycol, and the like. The nonionic emulsifier has a weight average molecular weight of preferably less than 10000, more preferably 500 to 8000, still more preferably 600 to 5000. Examples of the anionic emulsifier include salts of fatty acids such as myristic acid, palmitic acid, oleic acid, and linolenic acid; alkylbenzene sulfonates such as sodium dodecylbenzenesulfonate; higher alcohol sulfate salts such as sodium lauryl sulfate; higher phosphate salts such as sodium alkyl phosphates; and alkyl sulfosuccinates.

The total amount of the emulsifier used in the production method according to the present invention is preferably 0.1 to 5 parts by weight, more preferably 0.5 to 4 parts by weight, still more preferably 1 to 3 parts by weight relative to 100 parts by weight of the monomers used in polymerization. If the nonionic emulsifier is used in combination with the anionic emulsifier, the amount of the nonionic emulsifier to be used is more than 0 parts by weight and 4 parts by weight or less, preferably 0.1 to 3 parts by weight, more preferably 0.5 to 2 parts by weight, still more preferably 0.7 to 1.7 parts by weight relative to 100 parts by weight of the monomers used in polymerization, and the amount of the anionic emulsifier to be used is more than 0 parts by weight and 4 parts by weight or less, preferably 0.1 to 3 parts by weight, more preferably 0.5 to 2 parts by weight, still more preferably 0.35 to 0.75 parts by weight relative to 100 parts by weight of the monomers used in polymerization. In the case where the nonionic emulsifier is used in combination with the anionic emulsifier, the weight ratio of nonionic emulsifier/anionic emulsifier is preferably 1/99 to 99/1, more preferably 10/90 to 80/20, still more preferably 25/75 to 75/25, still more preferably 50/50 to 75/25. The weight ratio is particularly preferably 65/35 to 75/25 to more appropriately prevent fouling of the polymerization apparatus during polymerization.

In the production method according to the present invention, it is sufficient that emulsion polymerization is performed in the presence of the nonionic emulsifier and the anionic emulsifier. An emulsifier other than the nonionic emulsifier and the anionic emulsifier, such as a cationic emulsifier, can further be used in emulsion polymerization. Examples of the cationic emulsifier include alkyl trimethylammonium chlorides, dialkylammonium chlorides, benzylammonium chloride, and the like.

Besides the nonionic emulsifier and the anionic emulsifier, a polymerization initiator, a polymerization terminator, and the like can be used in emulsion polymerization according to standard methods.

As a polymerization initiator, azo compounds such as azobisisobutyronitrile; organic peroxides such as diisopropylbenzene hydroperoxide, cumene hydroperoxide, paramenthane hydroperoxide, and benzoyl peroxide; inorganic peroxides such as sodium persulfate, potassium persulfate, hydrogen peroxide, and ammonium persulfate; and the like can be used. These polymerization initiators can be used alone or in combination. The amount of the polymerization initiator to be used is preferably 0.001 to 1.0 part by weight relative to 100 parts by weight of the monomers used in polymerization.

The organic peroxides and the inorganic peroxides as the polymerization initiator are preferably used as a redox polymerization initiator in combination with a reducing agent. Any reducing agent can be used in combination. Examples thereof include compounds containing reduced metal ions, such as ferrous sulfate, hexamethylenediaminetetraacetic acid ferric sodium salt, and cuprous naphthenate; ascorbic acid (salts) such as ascorbic acid, sodium ascorbate, and potassium ascorbate; erythorbic acid (salts) such as erythorbic acid, sodium erythorbate, and potassium erythorbate; saccharides; sulfinic acid salts such as sodium hydroxymethanesulfinate; sulfurous acid salts such as sodium sulfite, potassium sulfite, sodium hydrogen sulfite, aldehyde sodium hydrogen sulfite, and potassium hydrogen sulfite; pyrosulfurous acid salts such as sodium pyrosulfite, potassium pyrosulfite, sodium hydrogen pyrosulfite, and potassium hydrogen pyrosulfite; thiosulfuric acid salts such as sodium thiosulfate and potassium thiosulfate; phosphorus acid (salts) such as phosphorus acid, sodium phosphite, potassium phosphite, sodium hydrogen phosphite, and potassium hydrogen phosphite; pyrophosphorus acid (salts) such as pyrophosphorus acid, sodium pyrophosphite, potassium pyrophosphite, sodium hydrogen pyrophosphite, and potassium hydrogen pyrophosphite; and sodium formaldehyde sulfoxylate; and the like. These reducing agents can be used alone or in combination. The amount of the reducing agent to be used is preferably 0.0003 to 0.5 parts by weight relative to 100 parts by weight of the monomers used in polymerization.

Examples of the polymerization terminator include hydroxylamine, hydroxyamine sulfate, diethylhydroxyamine, hydroxyamine sulfonate and alkali metal salts thereof, sodium dimethyldithiocarbamate, hydroquinone, and the like. The polymerization terminator can be used in any amount. The amount thereof is preferably 0.1 to 2 parts by weight relative to 100 parts by weight of the monomers used in polymerization.

The amount of water to be used is preferably 80 to 500 parts by weight, more preferably 100 to 300 parts by weight relative to 100 parts by weight of the monomers used in polymerization.

In emulsion polymerization, polymerization additives such as a molecular weight adjuster, a particle size adjuster, a chelating agent, and an oxygen trapping agent can be used as needed.

Although emulsion polymerization may be performed by any of a batchwise method, a semi-batchwise method, or a continuous method, a semi-batchwise method is preferred. Specifically, it is preferred that the polymerization reaction be performed while the monomer emulsion is being continuously added dropwise to a polymerization reaction system containing the polymerization initiator and the reducing agent from the start of the polymerization reaction to any time. It is more preferred that the polymerization reaction be performed while the monomer emulsion, the polymerization initiator, and the reducing agent are being continuously added dropwise to the polymerization reaction system from the start of the polymerization reaction to any time. By performing the polymerization reaction while these ingredients are being continuously added dropwise, the emulsion polymerization can be stably performed, improving the polymerization conversion ratio. The polymerization is performed in the temperature range of usually 0 to 70°C, preferably 5 to 50°C.

The polymerization reaction is performed while the monomer emulsion prepared by mixing the monomers used in polymerization with the nonionic emusifier, the anionic emulsifier and water is being continuously added dropwise. The monomer emulsion can be prepared by any method. Examples thereof include a method of stirring the total amount of the monomers used in polymerization, the total amount of the emulsifier, and water with a stirrer such as a homomixer and a disc turbine. The amount of water to be used in the monomer emulsion is 10 to 70 parts by weight, preferably 20 to 50 parts by weight relative to 100 parts by weight of the monomers used in polymerization.

If the polymerization reaction is performed while the monomer emulsion, the polymerization initiator, and the reducing agent are being continuously added dropwise to the polymerization reaction system from the start of the polymerization reaction to any time, these substances may be separately added dropwise to the polymerization system using a dropper, or at least the polymerization initiator and the reducing agent may be preliminarily mixed and prepared into an aqueous solution as needed, so that these agents may be added dropwise to the polymerization system from the same dropper. After the addition is completed, the reaction may be continued for any time to further improve the polymerization conversion ratio.

<Coagulation step>

The coagulation step in the production method according to the present invention is a step of adding a coagulant to the polymer emulsion prepared in the emulsion polymerization step to yield hydrous crumbs.

Any coagulant can be used without limitation. Examples thereof include mono- to trivalent metal salts. The mono- to trivalent metal salts are any salts containing metals which turn into mono- to trivalent metalions when the salts are dissolved in water. Examples thereof include, but should not be limited to, salts of inorganic acids selected from hydrochloric acid, nitric acid and sulfuric acid with a metal selected from sodium, potassium, lithium, magnesium, calcium, zinc, titanium, manganese, iron, cobalt, nickel, aluminum, and tin or salts of organic acids such as acetic acid with a metal selected from sodium, potassium, lithium, magnesium, calcium, zinc, titanium, manganese, iron, cobalt, nickel, aluminum, and tin. Hydroxides of these metals can also be used.

Specific examples of the mono- to trivalent metal salts include metal chlorides such as sodium chloride, potassium chloride, lithium chloride, magnesium chloride, calcium chloride, zinc chloride, titanium chloride, manganese chloride, iron chloride, cobalt chloride, nickel chloride, aluminum chloride, and tin chloride; nitric acid salts such as sodium nitrate, potassium nitrate, lithium nitrate, magnesium nitrate, calcium nitrate, zinc nitrate, titanium nitrate, manganese nitrate, iron nitrate, cobalt nitrate, nickel nitrate, aluminum nitrate, and tin nitrate; sulfuric acid salts such as sodium sulfate, potassium sulfate, lithium sulfate, magnesium sulfate, calcium sulfate, zinc sulfate, titanium sulfate, manganese sulfate, iron sulfate, cobalt sulfate, nickel sulfate, aluminum sulfate, and tin sulfate; and the like. Among these metal salts, preferred are calcium chloride, sodium chloride, aluminum sulfate, magnesium chloride, magnesium sulfate, zinc chloride, zinc sulfate, and sodium sulfate. Among these, preferred are mono- or divalent metal salts, and more preferred are calcium chloride, sodium chloride, magnesium sulfate, and sodium sulfate. Still more preferred are magnesium sulfate and sodium sulfate because the scorching stability of the resulting rubber composition can be further improved. These metal salts can be used alone or in combination.

The amount of the coagulant to be used is preferably 1 to 100 parts by weight relative to 100 parts by weight of the acrylic rubber ingredients in the polymer emulsion. The lower limit is preferably 1 part by weight or more, more preferably 2 parts by weight or more, still more preferably 3 parts by weight or more, and the upper limit is preferably 40 parts by weight or less, more preferably 20 parts by weight or less, still more preferably 12 parts by weight or less. According to the production method according to the present invention, emulsion polymerization is performed in the presence of the nonionic emulsifier and the anionic emulsifier. For this reason, the acrylic rubber can be favorably coagulated even with a relatively small amount of the coagulant as described above. Thereby, the amount of the coagulant in the hydrous crumbs yielded through the coagulation can be reduced, thus effectively preventing the mutual adhesion between the hydrous crumbs.

Although the coagulation temperature can be any temperature, it is preferably 50 to 90°C, more preferably 60 to 90°C, still more preferably 78 to 90°C.

In the production method according to the present invention, it is preferred that some of the compounding agents compounded in the acrylic rubber, specifically, at least one of an antioxidant, a lubricant, and an ethylene oxide polymer be preliminarily added to the polymer emulsion before the coagulant is added for coagulation. In other words, it is preferred that at least one of the antioxidant, the lubricant, and the ethylene oxide polymer be already compounded with the polymer emulsion, and the polymer emulsion containing these compounded ingredients be coagulated.

For example, an antioxidant preliminarily contained in the polymer emulsion before the coagulation step can effectively suppress the degradation of the acrylic rubber caused by heat during drying in the drying step described later. Specifically, a reduction in the Mooney viscosity attributed to the degradation caused by heating during drying can be effectively suppressed, which, in turn, results in a cross-linked rubber having effectively enhanced normal-state tensile strength and elongation at break. In addition, the antioxidant can be appropriately dispersed by compounding the antioxidant with the polymer emulsion before the coagulation step. For this reason, an effect from the addition of the antioxidant can be sufficiently demonstrated even with a reduced compounding amount thereof. Specifically, the effect from the addition of the antioxidant can be sufficiently demonstrated even with a relatively small compounding amount thereof, e.g., preferably 0.1 to 2 parts by weight, more preferably 0.2 to 1.2 parts by weight relative to 100 parts by weight of the acrylic rubber ingredients in the polymer emulsion. The effect from the addition of the antioxidant can also be sufficiently demonstrated even if the antioxidant is added to the polymer emulsion before the coagulation step, because the added antioxidant is not substantially removed in the subsequent steps such as coagulation, washing, and drying. Examples of methods of adding the antioxidant to the polymer emulsion include a method of adding the antioxidant to the polymer emulsion after the emulsion polymerization and before the coagulation, and a method of adding the antioxidant to the solution before the emulsion polymerization. The antioxidant, if added to the solution before the emulsion polymerization, may cause fouling of the polymerization apparatus. For this reason, preferred is the method of adding the antioxidant to the polymer emulsion after the emulsion polymerization and before the coagulation.

Any antioxidant can be used without limitation. Examples thereof include phenol antioxidants not containing a sulfur atom, such as 2,6-di-t-butyl-4-methylphenol, 2,6-di-t-butylphenol, butylhydroxyanisole, 2,6-di-t-butyl-$\alpha$-dimethyl-amino-p-cresol, octadecyl-3-(3,5-di-t-butyl-4-hydroxyphenyl)propionate, styrenated phenol, 2,2'-methylene-bis(6-$\alpha$-methyl-benzyl-p-cresol), 4,4'-methylene-bis(2,6-di-t-butylphenol), 2,2'-methylene-bis(4-methyl-6-t-butylphenol), stearyl 3-(3,5-di-tert-butyl-4-hydroxyphenyl)propionate, alkylated bisphenol, and a butylated reaction product of p-cresol and dicyclopentadiene; thiophenol antioxidants such as 2,4-bis[(octylthio)methyl]-6-methylphenol, 2,2'-thiobis-(4-methyl-6-t-butylphenol), 4,4'-thiobis-(6-t-butyl-o-cresol), and 2,6-di-t-butyl-4-((4,6-bis(octylthio)-1,3,5-triazin-2-yl)amino)phenol; phosphorus acid ester antioxidants such as tris(nonylphenyl)phosphite, diphenylisodecyl phosphite, and tetraphenyl dipropylene glycol diphosphite; sulfur ester antioxidants such as dilauryl thiodipropionate; amine antioxidants such as phenyl-$\alpha$-naphthylamine, phenyl-$\beta$-naphthylamine, p-(p-toluenesulfonylamide)-diphenylamine, 4,4'-(a,a-dimethylbenzyl)diphenylamine, N,N-diphenyl-p-phenylenediamine, N-isopropyl-N'-phenyl-p-phenylenediamine, and butylaldehyde-aniline condensates; imidazole antioxidants such as 2-mercaptobenzimidazole; quinoline antioxidants such as 6-ethoxy-2,2,4-trimethyl-1,2-dihydroquinoline; hydroquinone antioxidants such as 2,5-di-(t-amyl)hydroquinone; and the like. These antioxidants may be used alone or in combination.

If a lubricant is preliminarily contained in the polymer emulsion before the coagulation, the lubricant can be contained in the resulting acrylic rubber in the state where the lubricant is favorably dispersed. As a result, the tackiness of the resulting acrylic rubber can be appropriately reduced. Such a reduced tackiness can prevent the adhesion of the acrylic rubber to the dryer during drying so that the operability at the time of drying can be improved. Additionally, the reduced tackiness can also result in an acrylic rubber composition having high roll processability. The amount of the lubricant to be added is preferably 0.1 to 0.4 parts by weight, more preferably 0.15 to 0.3 parts by weight, still more preferably 0.2 to 0.3 parts by weight relative to 100 parts by weight of the acrylic rubber ingredients in the polymer emulsion. The effect from the addition of the lubricant can be sufficiently demonstrated if the lubricant is added to the polymer emulsion before the coagulation, because the lubricant preliminarily compounded is not substantially removed in the subsequent steps such as coagulation, washing, and drying.

Any lubricant can be used without limitation. Examples thereof include phosphoric acid esters, fatty acid esters, fatty acid amides, higher fatty acids, and the like. Examples of methods of adding the lubricant to the polymer emulsion include a method of adding the lubricant to the polymer emulsion after the emulsion polymerization and before the coagulation, and a method of adding the lubricant to the solution before the emulsion polymerization.

Furthermore, the coagulating properties of the polymer emulsion can be improved by adding an ethylene oxide polymer to the polymer emulsion in advance before the coagulation, thereby reducing the amount of the coagulant in the coagulation step. Thus, the amount of residual coagulant in the acrylic rubber finally obtained can be reduced, which, in turn, results in a cross-linked rubber having further enhanced water resistance. The ethylene oxide polymer may be any polymer having a polyethylene oxide structure as a main chain structure. Examples thereof include polyethylene oxide, polypropylene oxide, ethylene oxide-propylene oxide copolymers, and the like. Among these polymers, suitable is polyethylene oxide. The compounding amount of the ethylene oxide polymer is preferably 0.01 to 1 part by weight, more preferably 0.01 to 0.6 parts by weight, still more preferably 0.02 to 0.5 parts by weight relative to 100 parts by weight of the acrylic rubber ingredients in the polymer emulsion. The weight average molecular weight of the ethylene oxide polymer is preferably 10000 to 1000000, more preferably 10000 to 200000, still more preferably 20000 to 120000. Examples of methods of adding the ethylene oxide polymer to the polymer emulsion include a method of adding the ethylene oxide polymer to the polymer emulsion after the emulsion polymerization and before the coagulation, and a method of adding the ethylene oxide polymer to the solution before the emulsion polymerization.

If the antioxidant, the lubricant, and the ethylene oxide polymer are preliminarily added to the polymer emulsion before the coagulation, the antioxidant, the lubricant, and the ethylene oxide polymer may be added in any order, and their order may be appropriately selected.

If the antioxidant, the lubricant, and/or the ethylene oxide polymer is preliminarily added to the polymer emulsion before the coagulation, hydrous crumbs can be yielded by adding the coagulant to the resulting polymer emulsion to perform the coagulation operation under the same conditions as above.

<Washing step>

The production method according to the present invention preferably further comprises a washing step of washing the hydrous crumbs yielded in the coagulation step.

Any washing method can be used without limitation. Examples thereof include a method of washing hydrous crumbs with water by using water as a washing liquid, and mixing the hydrous crumbs with added water. The operation to wash hydrous crumbs with water can be performed at any temperature without limitation. The temperature is preferably 5 to 60°C, more preferably 10 to 50°C, and the mixing time is 1 to 60 minutes, more preferably 2 to 30 minutes.

Any amount of water can be added to the hydrous crumbs during washing of the hydrous crumbs with water. The amount of water per one washing operation with water is preferably 50 to 9800 parts by weight, more preferably 300 to 1800 parts by weight relative to 100 parts by weight of the solids content (mainly the acrylic rubber ingredients) of the hydrous crumbs because the amount of residual coagulant in the acrylic rubber finally yielded can be effectively reduced.

The operation to wash the hydrous crumbs with water can be performed any times. Although the operation may be performed one time, the number of the operations is preferably 2 to 10 times, more preferably 3 to 8 times to reduce the amount of a residual coagulant in the acrylic rubber finally yielded. Although a large number of times of washing with water is desirable to reduce the amount of residual coagulant in the acrylic rubber finally yielded, the number of times thereof is preferably within the range described above. Even if washing is performed beyond this range, the effect of removing the coagulant is small, and the number of steps is increased to significantly reduce the productivity.

In the production method according to the present invention, after washing with water, acid washing may be further performed using an acid as a washing liquid. Acid washing can result in a cross-linked rubber having further enhanced compression set resistance. If the acrylic rubber is a carboxyl group-containing acrylic rubber having a carboxyl group, the effect of improving the compression set resistance by acid washing is particularly significant. Any acid, such as sulfuric acid, hydrochloric acid, and phosphoric acid, can be used without limitation. If an acid is added to the hydrous crumbs during acid washing, the acid is preferably added in the form of an aqueous solution, preferably in the form of an aqueous solution having a pH of 6 or less, more preferably a pH of 4 or less, still more preferably a pH of 3 or less. Acid washing can be performed by any method without limitation. Examples thereof include a method of combining and mixing hydrous crumbs with an aqueous solution of an acid.

Acid washing can be performed at any temperature. The temperature is preferably 5 to 60°C, more preferably 10 to 50°C, and the mixing time is 1 to 60 minutes, more preferably 2 to 30 minutes. The washing liquid for acid washing can have any pH. The pH is preferably a pH of 6 or less, more preferably a pH of 4 or less, still more preferably a pH of 3 or less. The pH of the washing liquid for acid washing can be determined by measuring the pH of water contained in the hydrous crumbs after acid washing, for example.

After acid washing is performed, it is preferred that washing with water be further performed. The same conditions as those in washing with water can be used.

<Drying step>

The production method according to the present invention preferably further comprises a drying step of drying the hydrous crumbs washed in the washing step above.

The drying step can be performed by any drying method. Drying can be performed using a dryer such as a screw extruder, a kneader dryer, an expander dryer, a hot air dryer, and a reduced pressure dryer. A drying method using a combination thereof can also be used. Furthermore, before the hydrous crumbs are dried in the drying step, the hydrous crumbs may be separated as needed using a sieve, such as a rotary screen and a vibration screen, a centrifugal dehydrator; and the like.

For example, the drying step can be performed at any drying temperature, and the drying temperature varies according to the dryer used in drying. If a hot air dryer is used, the drying temperature is preferably 80 to 200°C, more preferably 100 to 170°C.

Thus, the acrylic rubber can be yielded by the production method according to the present invention.

The acrylic rubber thus produced has a Mooney viscosity (ML1+4, 100°C) (polymer Mooney) of preferably 10 to 80, more preferably 20 to 70, still more preferably 25 to 60.

In the acrylic rubber produced by the production method according to the present invention, the amount of residual coagulant contained in the acrylic rubber is preferably 9000 wt ppm or less, more preferably 7000 wt ppm or less, still more preferably 5000 wt ppm or less, particularly preferably 3500 ppm or less. Although the lower limit of the amount of residual coagulant can be any value, the lower limit is preferably 10 wt ppm or more. An amount of residual coagulant in the acrylic rubber within this range can provide a cross-linked rubber having higher water resistance. The amount of residual coagulant can be determined by performing element analysis on the acrylic rubber, and measuring the contents of the elements contained in the coagulant. The amount of residual coagulant can be controlled within this range by any method. Examples thereof include a method of coagulating the polymer emulsion in the presence of the ethylene oxide polymer at a temperature of 78°C or more in the coagulation step, a method of controlling the amount of the coagulant to be added within the range described above, and a method of adjusting the conditions for washing the hydrous crumbs with water.

Furthermore, the total amount of residual nonionic emulsifier and anionic emulsifier contained in the acrylic rubber according to the present invention is preferably 22000 wt ppm or less, more preferably 20000 wt ppm or less, still more preferably 18000 wt ppm or less, particularly preferably 17000 wt ppm or less. Although the lower limit of the amount of residual emulsifiers can be any value, the lower limit is preferably 10 wt ppm or more, more preferably 200 wt ppm or more, still more preferably 500 wt ppm or more. A total amount of residual nonionic emulsifier and anionic emulsifier in the acrylic rubber within this range can enhance the effect of preventing mutual adhesion between the hydrous crumbs. The total amount of residual nonionic emulsifier and anionic emulsifier can be determined as follows: The acrylic rubber is subjected to GPC measurement, and the total amount of residual emulsifiers is determined from the areas of molecular weight peaks corresponding to the emulsifiers in a chromatograph obtained by the GPC measurement.

<Acrylic rubber composition>

The acrylic rubber composition according to the present invention is prepared by compounding a cross-linking agent with the acrylic rubber yielded by the production method according to the present invention.

Any cross-linking agent can be used without limitation. Conventional known cross-linking agents can be used: for example, polyvalent amine compounds such as diamine compounds and carbonates thereof; sulfur; sulfur donors; triazinethiol compounds; polyvalent epoxy compounds; organic ammonium carboxylate salts; organic peroxides; dithiocarbamic acid metal salts; polyvalent carboxylic acids; quaternary onium salts; imidazole compounds; isocyanuric acid compounds; organic peroxides; and the like. These cross-linking agents can be used alone or in combination. It is preferred that the cross-linking agent be appropriately selected according to the type of the cross-linkable monomer unit.

Among these cross-linking agents, preferred cross-linking agents to be used are polyvalent amine compounds and carbonates thereof if the acrylic rubber produced by the production method according to the present invention has an α,β-ethylenically unsaturated carboxylic acid monomer unit as a cross-linkable monomer unit.

Any polyvalent amine compounds and carbonates thereof can be used without limitation. Preferred are $C_4$ to $C_{30}$ polyvalent amine compounds and carbonates thereof. Examples of such polyvalent amine compounds and carbonates thereof include aliphatic polyvalent amine compounds and carbonates thereof, and aromatic polyvalent amine compounds.

Any aliphatic polyvalent amine compounds and carbonates thereof can be used without limitation. Examples thereof include hexamethylenediamine, hexamethylenediamine carbamate, N,N'-dicinnamylidene-1,6-hexanediamine, and the like. Among these compounds, preferred is hexamethylenediamine carbamate.

Any aromatic polyvalent amine compounds can be used without limitation. Examples thereof include 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, m-xylylenediamine, p-xylylenediamine, and 1,3,5-benzenetriamine. Among these compounds, preferred is 2,2'-bis[4-(4-aminophenoxy)phenyl]propane.

The content of the cross-linking agent in the acrylic rubber composition according to the present invention is preferably 0.05 to 10 parts by weight, more preferably 0.1 to 5 parts by weight, particularly preferably 0.2 to 4 parts by weight relative to 100 parts by weight of the acrylic rubber. A content of the cross-linking agent within this range can provide a cross-linked rubber having sufficient rubber elasticity and high mechanical strength.

It is also preferred that the acrylic rubber composition according to the present invention further comprises a cross-linking accelerator. Any cross-linking accelerator can be used without limitation. If the acrylic rubber produced by the production method according to the present invention has a carboxyl group as a cross-linkable group and the cross-linking agent is a polyvalent amine compound or carbonate thereof, guanidine compounds, diazabicycloalkene compounds, imidazole compounds, quaternary onium salts, tertiary phosphine compounds, aliphatic monovalent secondary amine compounds, aliphatic monovalent tertiary amine compounds, and the like can be used, for example. Among these compounds, preferred are guanidine compounds, diazabicycloalkene compounds, and aliphatic monovalent secondary amine compounds, and particularly preferred are guanidine compounds. These basic cross-linking accelerators can be used alone or in combination.

Specific examples of the guanidine compounds include 1,3-di-o-tolylguanidine, 1,3-diphenylguanidine, and the like. Specific examples of the diazabicycloalkene compounds include 1,8-diazabicyclo[5.4.0]undec-7-ene, 1,5-diazabicyclo[4.3.0]non-5-ene, and the like. Specific examples of the imidazole compounds include 2-methylimidazole, 2-phenylimidazole, and the like. Specific examples of quaternary onium salts include tetra-n-butylamnonium bromide, octadecyl-tri-n-butylammonium bromide, and the like. Specific examples of the tertiary phosphine compounds include triphenylphosphine, tri-p-tolylphosphine, and the like.

The aliphatic monovalent secondary amine compounds are compounds where two hydrogen atoms of ammonia are substituted with an aliphatic hydrocarbon group. The aliphatic hydrocarbon groups which substitute the hydrogen atoms are preferably $C_1$ to $C_{30}$ groups. Specific examples of the aliphatic monovalent secondary amine compounds include dimethylamine, diethylamine, dipropylamine, diallylamine, diisopropylamine, di-n-butylamine, di-t-butylamine, di-sec-butylamine, dihexylamine, diheptylamine, dioctylamine, dinonylamine, didecylamine, diundecylamine, didodecylamine, ditridecylamine, ditetradecylamine, dipentadecylamine, dicetylamine, di-2-ethylhexylamine, dioctadecylamine, and the like.

The aliphatic monovalent tertiary amine compounds are compounds where all the three hydrogen atoms of ammonia are substituted with an aliphatic hydrocarbon group. The aliphatic hydrocarbon groups which substitute the hydrogen atoms are preferably $C_1$ to $C_{30}$ groups. Specific examples of the aliphatic monovalent tertiary amine compounds include trimethylamine, triethylamine, tripropylamine, triallylamine, triisopropylamine, tri-n-butylamine, tri-t-butylamine, tri-sec-butylamine, trihexylamine, triheptylamine, trioctylamine, trinonylamine, tridecylamine, triundecylamine, tridodecylamine, and the like.

The content of the cross-linking accelerator in the acrylic rubber composition according to the present invention is preferably 0.1 to 10 parts by weight, more preferably 0.5 to 7.5 parts by weight, particularly preferably 1 to 5 parts by weight relative to 100 parts by weight of the acrylic rubber. A content of the cross-linking accelerator within this range can result in a cross-linked rubber having further improved tensile strength and compression set resistance.

Besides the ingredients described above, the acrylic rubber composition according to the present invention can contain a compounding agent usually used in the rubber processing field. Examples of such a compounding agent include reinforcing fillers such as silica and carbon black; non-reinforcing fillers such as calcium carbonate and clay; antioxidants; light stabilizers; scorch preventing agents; plasticizers; processing aids; tackifiers; lubricants; greases; flame retardants; antifungal agents; antistatic agents; colorants; cross-linking retarders; and the like. These compounding agents can be compounded in any amount in the range not impairing the object and effect of the present invention, and can be appropriately compounded in amounts according to the purpose of compounding.

Furthermore, the acrylic rubber composition according to the present invention may further comprise a rubber other than the acrylic rubber according to the present invention, an elastomer, a resin, and the like in the range not impairing the effect of the present invention. For example, the followings can be compounded: acrylic rubber other than the acrylic rubber according to the present invention, rubber other than acrylic rubber such as natural rubber, polybutadiene rubber, polyisoprene rubber, styrene-butadiene rubber, acrylonitrile-butadiene rubber, silicon rubber, and fluororubber; elastomers such as olefin elastomers, styrene elastomers, vinyl chloride elastomers, polyester elastomers, polyamide elastomers, polyurethane elastomers, and polysiloxane elastomers; resins such as polyolefin resins, polystyrene resins, polyacrylic resins, polyphenylene ether resins, polyester resins, polycarbonate resins, polyamide resins, vinyl chloride resins, and fluorinated resins; and the like. The total compounding amount of the rubber other than the acrylic rubber according to the present invention, the elastomer, and the resin is preferably 50 parts by weight or less, more preferably 10 parts by weight or less, still more preferably 1 part by weight or less relative to 100 parts by weight of the acrylic rubber.

The acrylic rubber composition according to the present invention is prepared by compounding the cross-linking agent and a variety of compounding agents used as needed with the acrylic rubber, mixing and kneading these ingredients with a Banbury mixer or a kneader, and further kneading the ingredients using a kneading roll.

Although the ingredients can be compounded in any order, in a preferred order, ingredients which barely react or decompose by heat are sufficiently mixed, and then those which readily react or decompose by heat, such as a cross-linking agent, are mixed in a short time at a temperature at which the reaction and the decomposition thereof are avoided.

\<Cross-linked rubber\>

The cross-linked rubber according to the present invention is prepared by cross-linking the acrylic rubber composition according to the present invention described above.

The cross-linked rubber according to the present invention can be produced as follows: The acrylic rubber composition according to the present invention is formed with a forming machine which can form the acrylic rubber composition into a desired shape, such as an extruder, an injection molding machine, a compressor, a roll, and the like, and the formed product is cross-linked by heating into a cross-linked rubber having a fixed shape. In this case, cross-linking may be performed after the preliminarily formed, or cross-linking and forming may be performed at the same time. The forming temperature is usually 10 to 200°C, preferably 25 to 120°C. The cross-linking temperature is usually 130 to 220°C, preferably 150 to 190°C, and the cross-linking time is usually 2 minutes to 10 hours, preferably 3 minutes to 5 hours. The heating method may be appropriately selected from methods used in cross-linking of the rubber, such as press heating, steam heating, oven heating, and hot air heating.

The cross-linked rubber according to the present invention may be further heated to undergo secondary cross-linking according to the shape and size of the cross-linked rubber. The secondary cross-linking is performed preferably for 1 to 48 hours, although the time varies according to the heating method, the cross-linking temperature, and the shape of the product. The heating method and temperature may be appropriately selected.

The cross-linked rubber according to the present invention thus obtained is suitably used as sealing materials such as O-rings, packings, oil seals, and bearing seals; gaskets; buffer materials, vibration insulators; coating materials for electric wires; industrial belts; tubes and hoses; sheets; and the like, for example, in broad fields of transportation machines such as automobiles, general machinery, and electrical apparatuses.

EXAMPLES

The present invention will now be more specifically described by way of Examples and Comparative Examples. In Examples, "parts" are expressed in terms of weight, unless otherwise specified.

A variety of physical properties were evaluated according to the following methods.

[Mooney viscosity (ML1+4, 100°C)]

The Mooney viscosity (polymer Mooney) of the acrylic rubber was measured according to JIS K6300.

[Content of aggregates in polymer emulsion after the emulsion polymerization]

The solids content of an polymer emulsion after the emulsion polymerization (proportion where the entire polymer emulsion was 1) was measured. Then, 100 g of the polymer emulsion after the emulsion polymerization was precisely weighed, and was filtrated through a 200-mesh metal mesh made of SUS and having a known weight. The residue left on the metal mesh was washed with water several times to remove the polymer emulsion. The residue was dried at 105°C for 60 minutes, and the dry weight thereof was measured. Based on the following expression, the proportion (unit: wt%) of aggregates contained was determined:

$$\text{content (wt\%) of aggregates} = [(\alpha - \beta)/(\gamma \times \Delta)] \times 100$$

where $\alpha$ represents the total weight of the metal mesh and the dried aggregates after drying, $\beta$ represents the weight of the metal mesh, $\gamma$ represents the weight of the polymer emulsion, and $\Delta$ represents the solids content of the polymer emulsion.

The solids content of the polymer emulsion was determined by drying the polymer emulsion, and determining the solids content from the weight of the polymer emulsion before drying and that after drying based on the following expression:

$$\text{solids content } (\Delta) \text{ of polymer emulsion} = (\text{weight after}$$

$$\text{drying})/(\text{weight of polymer emulsion before drying})$$

[Mutual adhesion between hydrous crumbs after washing]

Hydrous crumbs (15 g) after washing were placed into a cylinder having an inner diameter of 10 mm, and were compressed under 1 MPa for 30 seconds into a cylindrical formed body through adhesion between crumb particles. The resulting cylindrical formed body was held with a clip, and was hung. The time until at least part of crumb particles forming the cylindrical formed body fell was measured as a fall time. It can be determined that a shorter fall time indicates lower mutual adhesion between hydrous crumbs after washing (hydrous crumbs tend not to adhere to each other).

[Moisture content of acrylic rubber after drying]

The acrylic rubber after drying was placed on an aluminum dish, and was dried in an oven at 100°C for one hour. From the weights of the acrylic rubber before and after drying, the moisture content of the acrylic rubber after drying was determined according to the following expression:

$$\text{moisture content } (\text{wt}\%) \text{ of acrylic rubber after drying} =$$

$$[((\text{weight } (g) \text{ before drying}) - (\text{weight } (g) \text{ after one-hour drying}))/(\text{weight}$$

$$(g) \text{ before drying})] \times 100$$

[Mooney scorch test]

The Mooney scorch of an acrylic rubber composition was measured according to JIS K6300 under a measurement condition at 125°C to determine the Mooney scorch time t5 (minutes), the Mooney scorch time t35 (minutes), and the minimum value Vm of the Mooney viscosity. It can be determined that greater values of the Mooney scorch times t5 and t35 indicate higher scorching stability, and that a smaller value of Vm indicates higher processability during forming.

[Mooney scorch test after storage under highly humid condition]

An acrylic rubber composition was stored in a highly humid environment at 40°C and 90 %RH for 168 hours. The Mooney scorch of the acrylic rubber composition stored in the highly humid environment was measured according to JIS K6300 under a measurement condition at 125°C to determine the Mooney scorch time t5 (minutes), the Mooney scorch time t35 (minutes), and the minimum value Vm of the Mooney viscosity. It can be determined that greater values of the Mooney scorch times t5 and t35 indicate higher scorching stability, and that a smaller value of Vm indicates higher processability during forming.

[Tensile strength and elongation]

An acrylic rubber composition was placed into a metal mold having a length of 15 cm, a width of 15 cm, and a depth of 0.2 cm. The acrylic rubber composition was then pressed at 170°C for 20 minutes under a pressure of 10 MPa to be primarily cross-linked. The primarily cross-linked product was then further heated in a gear oven at 170°C for 4 hours to be secondarily cross-linked. A sheet-shaped cross-linked rubber was thereby prepared. The resulting cross-linked rubber was punched out with a # 3 dumbbell into a test piece. In the next step, this test piece was used to measure the tensile strength and the elongation according to JIS K6251.

[Water resistance]

An acrylic rubber composition was placed into a metal mold having a length of 15 cm, a width of 15 cm, and a depth of 0.2 cm. The acrylic rubber composition was then pressed at 170°C for 20 minutes under a pressure of 10 MPa to be primarily cross-linked. The primarily cross-linked product was then further heated in a gear oven at 170°C for 4 hours to be secondarily cross-linked. A sheet-shaped cross-linked rubber product was thereby prepared. A test piece of 3 cm $\times$ 2 cm $\times$ 0.2 cm was cut from the resulting sheet-shaped cross-linked rubber. According to JIS K6258, an immersion test of immersing the test piece in distilled water adjusted to a temperature of 80°C for 70 hours was performed. The change ratio of the volume of the test piece before and after the immersion was determined according to the following expression. It can be determined that a smaller change ratio of the volume before and after the immersion indicates more significant reduction in swelling of the rubber product by water and thus higher water resistance.

$$\text{change ratio (\%) of volume before and after immersion} =$$

$$[(\text{volume of test piece after immersion}) - (\text{volume of test piece before}$$

$$\text{immersion})]/(\text{volume of test piece before immersion}) \times 100$$

[Production Example 1]

46.294 parts of pure water, 49.3 parts of ethyl acrylate, 49.3 parts of n-butyl acrylate, 1.4 parts of mono-n-butyl fumarate, 0.567 parts of sodium lauryl sulfate (trade name "Emal 2FG", made by Kao Corporation) as an anionic surfactant, and 1.4 parts of polyoxyethylene dodecyl ether (trade name "EMALGEN 105", weight average molecular weight: about 1500, made by Kao Corporation) as a nonionic surfactant were placed into a mixing container provided with a homomixer, and were stirred to prepare a monomer emulsion.

In the next step, 170.853 parts of pure water and 2.97 parts of the monomer emulsion prepared above were placed into a polymerization reaction tank provided with a thermometer and a stirrer, and were cooled to a temperature of 12°C under a nitrogen stream. Then, 145.29 parts of the monomer emulsion prepared above, 0.00033 parts of ferrous sulfate as a reducing agent, 0.264 parts of sodium ascorbate as a reducing agent, and 7.72 parts of an aqueous solution of 2.85 wt% potassium persulfate (0.22 parts in terms of potassium persulfate) as a polymerization initiator were continuously added dropwise into the polymerization reaction tank over three hours. Subsequently, the reaction was continued for one hour in the state where the inner temperature of the polymerization reaction tank was kept at 23°C. After it was checked that the polymerization conversion ratio reached 95%, hydroquinone as a polymerization terminator was added to terminate the polymerization reaction. An polymer emulsion was thereby prepared. The content of aggregates in the resulting polymer emulsion was measured according to the method described above. No aggregates were observed in the polymer emulsion, that is, the content was 0 wt%. Furthermore, fouling caused by adhesion of aggregates was not observed inside the polymerization reaction tank.

Then, relative to 100 parts of the polymer emulsion prepared through polymerization, 0.3 parts of stearyl 3-(3,5-di-tert-butyl-4-hydroxyphenyl)propionate as an antioxidant (trade name "Irganox 1076", made by BASF SE) (1 part relative to 100 parts of the total charged monomers used in preparation of the polymer emulsion (namely, total of ethyl acrylate, n-butyl acrylate, and mono-n-butyl fumarate)), 0.011 parts of polyethylene oxide (weight average molecular weight (Mw) = 100000) (0.039 parts relative to 100 parts of the total charged monomers used in preparation of the polymer emulsion), and 0.075 parts of polyoxyethylene stearyl ether phosphoric acid as a lubricant (trade name "Phosphanol RL-210", weight average molecular weight: about 500, made by Toho Chemical Industry, Co., Ltd.) (0.25 parts relative to 100 parts of the total charged monomers used in preparation of the polymer emulsion) were mixed to prepare a liquid mixture. The resulting liquid mixture was transferred to a coagulation tank, and 60 parts of industrial water was added to 100 parts of the liquid mixture. The liquid mixture was heated to 85°C. While the liquid mixture was being stirred at a temperature of 85°C, 3.3 parts of sodium sulfate as a coagulant (11 parts relative to 100 parts of the polymer contained in the liquid mixture) was continuously added to coagulate the polymer. The product was then filtered to obtain hydrous crumbs of Acrylic rubber (A1).

In the next step, 388 parts of industrial water was added relative to 100 parts (on a solids content basis) of the resulting hydrous crumbs, followed by stirring at room temperature for 5 minutes in the coagulation tank. Water was then discharged from the coagulation tank to complete washing of the hydrous crumbs with water. Such an operation to wash hydrous crumbs with water was repeated four times in this Production Example.

In the next step, an aqueous solution of sulfuric acid (pH = 3) prepared by mixing 388 parts of industrial water and 0.13 parts of concentrated sulfuric acid was added relative to 100 parts (on a solids content basis) of the hydrous crumbs washed with water, followed by stirring at room temperature for 5 minutes in the coagulation tank. The liquid was then discharged from the coagulation tank to complete washing of the hydrous crumbs with the acid. The measurement of the pH of the hydrous crumbs after acid washing (pH of water in the hydrous crumbs) showed that pH = 3. An amount of 388 parts of pure water was added per 100 parts (on a solids content basis) of the hydrous crumbs washed with the acid, followed by stirring at room temperature for 5 minutes in the coagulation tank. Water was then discharged from the coagulation tank to complete washing of the hydrous crumbs with pure water. Mutual adhesion between the hydrous crumbs after washing was measured according to the method described above. The results are shown in Table 1.

The hydrous crumbs after washing were then dried in a hot air dryer at 110°C for one hour to yield solid Acrylic rubber (A1). The moisture content of Acrylic rubber (A1) after drying was measured according to the method described above. Acrylic rubber (A1) contained substantially no moisture, that is, the moisture content was 0 wt%. Acrylic rubber (A1) had a Mooney viscosity (ML1+4, 100°C) of 33. The composition of Acrylic rubber (A1) consisted of 49.3 wt% of ethyl acrylate unit, 49.3 wt% of n-butyl acrylate unit, and 1.4 wt% of mono-n-butyl fumarate unit.

[Production Example 2]

A monomer emulsion was prepared in the same manner as in Production Example 1 except that polyoxyethylene dodecyl ether used as the nonionic surfactant was replaced with 1.4 parts of polyethylene oxide-polypropylene oxide glycol (trade name "PLONON 208", made by NOF CORPORATION). The resulting monomer emulsion was then subjected to emulsion polymerization in the same manner as in Production Example 1 to prepare a polymer emulsion. The content of aggregates in the resulting polymer emulsion was measured according to the method described above. No aggregates were observed at all, that is, the content was 0 wt%. Furthermore, fouling caused by adhesion of aggregates was not observed inside the polymerization reaction tank.

In the next step, a liquid mixture was prepared using the resulting polymer emulsion, and was coagulated in the same manner as in Production Example 1 to yield hydrous crumbs of Acrylic rubber (A2). The resulting hydrous crumbs of Acrylic rubber (A2) were subjected to four-time washing with water, acid washing, and washing with pure water in the same manner as in Production Example 1. The mutual adhesion between the hydrous crumbs after washing was then measured according to the method described above. The results are shown in Table 1.

The hydrous crumbs after washing were then dried in a hot air dryer at 110°C for one hour to yield solid Acrylic rubber (A2). The moisture content of Acrylic rubber (A2) after drying was measured according to the method described above. It was found that Acrylic rubber (A2) contained substantially no moisture, and the content was 0 wt%. Acrylic rubber (A2) had a Mooney viscosity (ML1+4, 100°C) of 33. The composition of Acrylic rubber (A2) consisted of 49.3 wt% of ethyl acrylate unit, 49.3 wt% of n-butyl acrylate unit, and 1.4 wt° of mono-n-butyl fumarate unit.

[Production Example 3]

A monomer emulsion was prepared in the same manner as in Production Example 1 except that polyoxyethylene dodecyl ether used as the nonionic surfactant was replaced with 1.4 parts of polyethylene oxide monostearate (trade name "NONION S40", made by NOF CORPORATION). The resulting monomer emulsion was then subjected to emulsion polymerization in the same manner as in Production Example 1 to prepare a polymer emulsion. The content of aggregates in the resulting polymer emulsion was measured according to the method described above. No aggregates were observed at all, that is, the content was 0 wt%. Furthermore, fouling caused by adhesion of aggregates was not observed inside the polymerization reaction tank.

In the next step, a liquid mixture was prepared using the resulting polymer emulsion, and was coagulated in the same manner as in Production Example 1 to yield hydrous crumbs of Acrylic rubber (A3). Furthermore, the resulting hydrous crumbs of Acrylic rubber (A3) were subjected to four-time washing with water, acid washing, and four-time washing with pure water in the same manner as in Production Example 1. The mutual adhesion between the hydrous crumbs after washing was then measured according to the method described above. The results are shown in Table 1.

The hydrous crumbs after washing were then dried in a hot air dryer at 110°C for one hour to yield solid Acrylic rubber (A3). The moisture content of Acrylic rubber (A3) after drying was measured according to the method described above. Acrylic rubber (A3) contained substantially no moisture, that is, the moisture content was 0 wt%. Acrylic rubber (A3) had a Mooney viscosity (ML1+4, 100°C) of 33. The composition of Acrylic rubber (A3) consisted of 49.3 wt% of ethyl acrylate unit, 49.3 wt% of n-butyl acrylate unit, and 1.4 wt% of mono-n-butyl fumarate unit.

[Production Example 4]

A monomer emulsion was prepared in the same manner as in Production Example 1 except that polyoxyethylene dodecyl ether used as the nonionic surfactant was replaced with 1.4 parts of polyethylene oxide nonylphenol (trade name "NOIGEN EA70", made by Dai-ichi Kogyo Seiyaku Co., Ltd.). The resulting monomer emulsion was then subjected to emulsion polymerization in the same manner as in Production Example 1 to prepare a polymer emulsion. The content of aggregates in the resulting polymer emulsion was measured according to the method described above. No aggregates were observed at all, that is, the content was 0 wt%. Furthermore, fouling caused by adhesion of aggregates was not observed inside the polymerization reaction tank.

In the next step, a liquid mixture was prepared using the resulting polymer emulsion, and was coagulated in the same manner as in Production Example 1 to yield hydrous crumbs of Acrylic rubber (A4). Furthermore, the resulting hydrous crumbs of Acrylic rubber (A4) were subjected to four-time washing with water, acid washing, and washing with pure water in the same manner as in Production Example 1. The mutual adhesion between the hydrous crumbs after washing was then measured according to the method described above. The results are shown in Table 1.

The hydrous crumbs after washing were then dried in a hot air dryer at 110°C for one hour to yield solid Acrylic rubber (A4). The moisture content of Acrylic rubber (A4) after drying was measured according to the method described above. Acrylic rubber (A4) contained substantially no moisture, that is, the moisture content was 0 wt%. Acrylic rubber (A4) had a Mooney viscosity (ML1+4, 100°C) of 33. The composition of Acrylic rubber (A4) consisted of 49.3 wt% of ethyl acrylate unit, 49.3 wt% of n-butyl acrylate unit, and 1.4 wt% of mono-n-butyl fumarate unit.

[Production Example 5]

Emulsion polymerization, preparation of a liquid mixture, and the coagulation operation were performed in the same manner as in Production Example 1 except that 3.3 parts of sodium sulfate used as the coagulant during coagulation was replaced with 1.1 parts of magnesium sulfate (3.7 parts relative to 100 parts of the polymer contained in the liquid mixture). Hydrous crumbs of Acrylic rubber (A5) were yielded. Furthermore, the resulting hydrous crumbs of Acrylic rubber (A5) were subjected to four-time washing with water, acid washing, and washing with pure water in the same manner as in Production Example 1. The mutual adhesion between the hydrous crumbs after washing was then measured according to the method described above. The results are shown in Table 1.

The hydrous crumbs after washing were then dried in a hot air dryer at 110°C for one hour to yield solid Acrylic rubber (A5). The moisture content of Acrylic rubber (A5) after drying was measured according to the method described above. Acrylic rubber (A5) contained substantially no moisture, that is, the moisture content was 0 wt%. Acrylic rubber (A5) had a Mooney viscosity (ML1+4, 100°C) of 33. The composition of Acrylic rubber (A5) consisted of 49.3 wt% of ethyl acrylate unit, 49.3 wt% of n-butyl acrylate unit, and 1.4 wt% of mono-n-butyl fumarate unit.

[Production Example 6]

A monomer emulsion was prepared in the same manner as in Production Example 1 except that the amount of polyoxyethylene dodecyl ether used as the nonionic surfactant was changed from 1.4 parts to 0.7 parts. The resulting monomer emulsion was then subjected to emulsion polymerization in the same manner as in Production Example 1 to prepare a polymer emulsion. The content of aggregates in the resulting polymer emulsion was measured according to the method described above. The content of aggregates were as slight as 0.6 wt%. Furthermore, fouling caused by adhesion of aggregates was not observed inside the polymerization reaction tank.

In the next step, a liquid mixture was prepared using the resulting polymer emulsion, and was coagulated in the same manner as in Production Example 1 to yield hydrous crumbs of Acrylic rubber (A6). Furthermore, the resulting hydrous crumbs of Acrylic rubber (A6) were subjected to four-time washing with water, acid washing, and washing with pure water in the same manner as in Production Example 1. The mutual adhesion between the hydrous crumbs after washing was then measured according to the method described above. The results are shown in Table 1.

The hydrous crumbs after washing were then dried in a hot air dryer at 110°C for one hour to yield solid Acrylic rubber (A6). The moisture content of Acrylic rubber (A6) after drying was measured according to the method described above. Acrylic rubber (A6) contained substantially no moisture, that is, the moisture content was 0 wt%. Acrylic rubber (A6) had a Mooney viscosity (ML1+4, 100°C) of 33. The composition of Acrylic rubber (A6) consisted of 49.3 wt% of ethyl acrylate unit, 49.3 wt% of n-butyl acrylate unit, and 1.4 wt% of mono-n-butyl fumarate unit.

[Production Example 7]

A monomer emulsion was prepared in the same manner as in Production Example 1 except that the amount of polyoxyethylene dodecyl ether used as the nonionic surfactant was changed from 1.4 parts to 1.2 parts. The resulting monomer emulsion was then subjected to emulsion polymerization in the same manner as in Production Example 1 to prepare a polymer emulsion. The content of aggregates in the resulting polymer emulsion was measured according to the method described above. The content of aggregates were very slight at 0.1 wt%. Furthermore, fouling caused by adhesion of aggregates was not observed inside the polymerization reaction tank.

In the next step, a liquid mixture was prepared using the resulting polymer emulsion, and was coagulated in the same manner as in Production Example 1 to yield hydrous crumbs of Acrylic rubber (A7). Furthermore, the resulting hydrous crumbs of Acrylic rubber (A7) were subjected to four-time washing with water, acid washing, and washing with pure water in the same manner as in Production Example 1. The mutual adhesion between the hydrous crumbs after washing was then measured according to the method described above. The results are shown in Table 1.

The hydrous crumbs after washing were then dried in a hot air dryer at 110°C for one hour to yield solid Acrylic rubber (A7). The moisture content of Acrylic rubber (A7) after drying was measured according to the method described above. Acrylic rubber (A7) contained substantially no moisture, that is, the moisture content was 0 wt%. Acrylic rubber (A7) had a Mooney viscosity (ML1+4, 100°C) of 33. The composition of Acrylic rubber (A7) consisted of 49.3 wt% of ethyl acrylate unit, 49.3 wt% of n-butyl acrylate unit, and 1.4 wt% of mono-n-butyl fumarate unit.

[Production Example 8]

A monomer emulsion was prepared in the same manner as in Production Example 1 except that the amount of sodium lauryl sulfate used as the anionic surfactant was changed from 0.567 parts to 0.8 parts. The resulting monomer emulsion was then subjected to emulsion polymerization in the same manner as in Production Example 1 to prepare a polymer emulsion. The content of aggregates in the resulting polymer emulsion was measured according to the method described above. No aggregates were observed at all, that is, the content was 0 wt%. Furthermore, fouling caused by adhesion of aggregates was not observed inside the polymerization reaction tank.

In the next step, a liquid mixture was prepared using the resulting polymer emulsion, and was coagulated in the same manner as in Production Example 1 to yield hydrous crumbs of Acrylic rubber (A8). Furthermore, the resulting hydrous crumbs of Acrylic rubber (A8) were subjected to four-time washing with water, acid washing, and washing with pure water in the same manner as in Production Example 1. The mutual adhesion between the hydrous crumbs after washing was then measured according to the method described above. The results are shown in Table 1.

The hydrous crumbs after washing were then dried in a hot air dryer at 110°C for one hour to yield solid Acrylic rubber (A8). The moisture content of Acrylic rubber (A8) after drying was measured according to the method described above. Acrylic rubber (A8) contained substantially no moisture, that is, the moisture content was 0 wt%. Acrylic rubber (A8) had a Mooney viscosity (ML1+4, 100°C) of 33. The composition of Acrylic rubber (A8) consisted of 49.3 wt% of ethyl acrylate unit, 49.3 wt% of n-butyl acrylate unit, and 1.4 wt% of mono-n-butyl fumarate unit.

[Production Example 9]

Emulsion polymerization, preparation of a liquid mixture, and the coagulation operation were performed in the same manner as in Production Example 1 except that 3.3 parts of sodium sulfate used as the coagulant during coagulation was replaced with 1.1 parts of calcium chloride (3.7 parts relative to 100 parts of the polymer contained in the liquid mixture). Hydrous crumbs of Acrylic rubber (A9) were thereby yielded. Furthermore, the resulting hydrous crumbs of Acrylic rubber (A9) were subjected to four-time washing with water, acid washing, and washing with pure water in the same manner as in Production Example 1. The mutual adhesion between the hydrous crumbs after washing was then measured according to the method described above. The results are shown in Table 1.

The hydrous crumbs after washing were then dried in a hot air dryer at 110°C for one hour to yield solid Acrylic rubber (A9). The moisture content of Acrylic rubber (A9) after drying was measured according to the method described above. Acrylic rubber (A9) contained substantially no moisture, that is, the moisture content was 0 wt%. Acrylic rubber (A9) had a Mooney viscosity (ML1+4, 100°C) of 33. The composition of Acrylic rubber (A9) was consisted 49.3 wt% of ethyl acrylate unit, 49.3 wt% of n-butyl acrylate unit, and 1.4 wt% of mono-n-butyl fumarate unit.

[Production Example 10]

A monomer emulsion was prepared in the same manner as in Production Example 1 except that polyoxyethylene dodecyl ether as the nonionic surfactant was not used. The resulting monomer emulsion was then subjected to emulsion polymerization in the same manner as in Production Example 1 to prepare a polymer emulsion. The content of aggregates in the resulting polymer emulsion was measured according to the method described above. The content of aggregates was 2.1 wt%. Fouling caused by adhesion of aggregates was observed inside the polymerization reaction tank.

In the next step, a liquid mixture was prepared using the resulting polymer emulsion, and was coagulated in the same manner as in Production Example 1 to yield hydrous crumbs of Acrylic rubber (A10). Furthermore, the resulting hydrous crumbs of Acrylic rubber (A10) were subjected to four-time washing with water, acid washing, and washing with pure water in the same manner as in Production Example 1. The mutual adhesion between the hydrous crumbs after washing was then measured according to the method described above. The results are shown in Table 1.

The hydrous crumbs after washing were then dried in a hot air dryer at 110°C for one hour to yield solid Acrylic rubber (A10). The moisture content of Acrylic rubber (A10) after drying was measured according to the method described above. The moisture content was 2.5 wt%. It can be determined that drying at 110°C for one hour was insufficient. Acrylic rubber (A10) had a Mooney viscosity (ML1+4, 100°C) of 33. The composition of Acrylic rubber (A10) consisted of 49.3 wt% of ethyl acrylate unit, 49.3 wt% of n-butyl acrylate unit, and 1.4 wt% of mono-n-butyl fumarate unit.

[Production Example 11]

A monomer emulsion was prepared in the same manner as in Production Example 1 except that polyoxyethylene dodecyl ether as the nonionic surfactant was not used. The resulting monomer emulsion was then subjected to emulsion polymerization in the same manner as in Production Example 1 to prepare a polymer emulsion. The content of aggregates in the resulting polymer emulsion was measured according to the method described above. The content of aggregates was 2.1 wt%. Fouling caused by adhesion of aggregates was observed inside the polymerization reaction tank.

In the next step, a liquid mixture was prepared using the resulting polymer emulsion, and was coagulated in the same manner as in Production Example 1 to yield hydrous crumbs of Acrylic rubber (A11). Furthermore, the resulting hydrous crumbs of Acrylic rubber (A11) were subjected to four-time washing with water, acid washing, and washing with pure water in the same manner as in Production Example 1. The mutual adhesion between the hydrous crumbs after washing was then measured according to the method described above. The results are shown in Table 1.

The hydrous crumbs after washing were then dried in a hot air dryer at 110°C for 2.5 hours to yield solid Acrylic rubber (A11). The moisture content of Acrylic rubber (A11) after drying was measured according to the method described above. Acrylic rubber (A11) contained substantially no moisture, that is, the moisture content was 0 wt%. Acrylic rubber (A11) had a Mooney viscosity (ML1+4, 100°C) of 33. The composition of Acrylic rubber (A11) consisted of 49.3 wt% of ethyl acrylate unit, 49.3 wt% of n-butyl acrylate unit, and 1.4 wt% of mono-n-butyl fumarate unit.

[Production Example 12]

A monomer emulsion was prepared in the same manner as in Production Example 1 except that polyoxyethylene dodecyl ether as the nonionic surfactant was not used and the amount of sodium lauryl sulfate as the anionic surfactant was changed from 0.567 parts to 1.701 parts. The resulting monomer emulsion was then subjected to emulsion polymerization in the same manner as in Production Example 1 to prepare a polymer emulsion. The content of aggregates in the resulting polymer emulsion was measured according to the method described above. No aggregates were observed at all, that is, the content was 0 wt%. Furthermore, fouling caused by adhesion of aggregates was not observed inside the polymerization reaction tank.

In the next step, the resulting polymer emulsion was used, and preparation of a liquid mixture and the coagulation operation were performed in the same manner as in Production Example 1 except that the amount of sodium sulfate used as the coagulant was changed from 3.3 parts to 10 parts (33.3 parts relative to 100 parts of the polymer contained in the liquid mixture). Hydrous crumbs of Acrylic rubber (A12) were thereby yielded. Furthermore, the resulting hydrous crumbs of Acrylic rubber (A12) were subjected to four-time washing, acid washing, and washing with pure water in the same manner as in Production Example 1. The mutual adhesion between the hydrous crumbs after washing was then measured according to the method described above. The results are shown in Table 1. In Production Example 12, the amount of sodium sulfate as the coagulant was increased to 10 parts from 3.3 parts in Production Example 1. This increase is because the liquid mixture was not coagulated without increasing the amount of sodium sulfate.

The hydrous crumbs after washing were then dried in a hot air dryer at 110°C for one hour to yield solid Acrylic rubber (A12). The moisture content of Acrylic rubber (A12) after drying was measured according to the method described above. Acrylic rubber (A12) contained substantially no moisture, that is, the moisture content was 0 wt%. Acrylic rubber (A12) had a Mooney viscosity (ML1+4, 100°C) of 33. The composition of Acrylic rubber (A12) consisted of 49.3 wt% of ethyl acrylate unit, 49.3 wt% of n-butyl acrylate unit, and 1.4 wt% of mono-n-butyl fumarate unit.

[Production Example 13]

A monomer emulsion was prepared in the same manner as in Production Example 1 except that sodium lauryl sulfate as the anionic surfactant was not used. The resulting monomer emulsion was then subjected to emulsion polymerization in the same manner as in Production Example 1 to prepare a polymer emulsion. The content of aggregates in the resulting polymer emulsion was measured according to the method described above. The content of aggregates was 20 wt%. Remarkable fouling caused by adhesion of aggregates was very significantly observed inside the polymerization reaction tank. Furthermore, the resulting polymer emulsion had an excessively large amount of aggregates, and could not be subjected to the subsequent steps including the coagulation operation.

[Example 1]

30 parts of Clay (trade name "Satintone clay 5A", made by TAKEHARA KAGAKU KOGYO CO., LTD., calcined kaolin), 15 parts of silica (trade name "CARPLEX 1120", made by Evonik Industries AG), 35 parts of silica (trade name "CARPLEX 67", made by Evonik Industries AG), 2 parts of stearic acid, 2 parts of 4,4'-bis($\alpha$,$\alpha$-dimethylbenzyl)diphenylamine (trade name "NOCRAC CD", made by Ouchi Shinko Chemical Industrial Co., Ltd.), and 1 part of 3-methacryloxypropyltrimethoxysilane (trade name "KBM-503", made by ShinEtu Silicone, silane coupling agent) were added to 100 parts of Acrylic rubber (A1) prepared in Production Example 1, and were mixed at 50°C for 5 minutes using a Banbury mixer. The resulting mixture was then transferred to a roll at 50°C, and 0.6 parts of hexamethylenediamine carbamate (trade name "Diak #1", made by Dupont Dow Elastomers LLC, aliphatic polyvalent amine compound) and 2 parts of 1,3-di-o-tolylguanidine (trade name "NOCCELER DT", made by Ouchi Shinko Chemical Industrial Co., Ltd., cross-linking accelerator) were compounded. The mixture was kneaded to prepare an acrylic rubber composition.

The measurement and evaluation of the Mooney scorch test, the Mooney scorch test after storage under the above-mentioned condition, the tensile strength, the elongation, and the water resistance were performed on the resulting acrylic rubber composition according to the methods described above. The results are shown in Table 2.

[Examples 2 to 9]

Acrylic rubber compositions were prepared in the same manner as in Example 1 except that Acrylic rubber (A1) prepared in Production Example 1 was replaced with each of Acrylic rubbers (A2) to (A9) prepared in Production Examples 2 to 9, and measurement and evaluation of the resulting acrylic rubber compositions were performed in the same manner as in Example 1. The results are shown in Table 2.

[Comparative Examples 1 to 3]

Acrylic rubber compositions were prepared in the same manner as in Example 1 except that Acrylic rubber (A1) prepared in Production Example 1 was replaced with each of Acrylic rubbers (A10) to (A12) prepared in Production Examples 10 to 12, and measurement and evaluation of the resulting acrylic rubber compositions were performed in the same manner as in Example 1. The results are shown in Table 2.

[Table 1]

Table 1

| | | | Production Example | | | | | | | | | | | | | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Types of acrylic rubber | | | (A1) | (A2) | (A3) | (A4) | (A5) | (A6) | (A7) | (A8) | (A9) | (A10) | (A11) | (A12) | (A13) |
| | Pure water | (parts) | 46.294 | 46.294 | 46.294 | 46.294 | 46.294 | 46.294 | 46.294 | 46.294 | 46.294 | 46.294 | 46.294 | 46.294 | 46.294 |
| | Ethyl acrylate | (parts) | 49.3 | 49.3 | 49.3 | 49.3 | 49.3 | 49.3 | 49.3 | 49.3 | 49.3 | 49.3 | 49.3 | 49.3 | 49.3 |
| | n-Butyl acrylate | (parts) | 49.3 | 49.3 | 49.3 | 49.3 | 49.3 | 49.3 | 49.3 | 49.3 | 49.3 | 49.3 | 49.3 | 49.3 | 49.3 |
| | Mono-n-butyl fumarate | (parts) | 1.4 | 1.4 | 1.4 | 1.4 | 1.4 | 1.4 | 1.4 | 1.4 | 1.4 | 1.4 | 1.4 | 1.4 | 1.4 |
| | Sodium lauryl sulfate (emulsifier) | (parts) | 0.567 | 0.567 | 0.567 | 0.567 | 0.567 | 0.567 | 0.567 | 0.8 | 0.567 | 0.567 | 0.567 | 1.701 | |
| Monomer emulsion composition (*1) | Polyoxyethylene dodecyl ether (emulsifier) | (parts) | 1.4 | | | | 1.4 | 0.7 | 1.2 | 1.4 | 1.4 | | | | 1.4 |
| | Polyethylene oxide-polypropylene oxide glycol (emulsifier) | (parts) | | 1.4 | | | | | | | | | | | |
| | Polyethylene oxide monostearate (emulsifier) | (parts) | | | 1.4 | | | | | | | | | | |
| | Polyethylene oxide nonylphenol (emulsifier) | (parts) | | | | 1.4 | | | | | | | | | |

| | | | Production Example | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Types of acrylic rubber | | | (A1) | (A2) | (A3) | (A4) | (A5) | (A6) | (A7) | (A8) | (A9) | (A10) | (A11) | (A12) | (A13) |
| Polymerization condition | Method of adding monomer emulsion | | Continuous addition | Continuous addition | Continuous addition | Continuous addition | Continuous addition | Continuous addition | Continuous addition | Continuous addition | Continuous addition | Continuous addition | Continuous addition | Continuous addition | Continuous addition |
| | Method of adding polymerization initiator | | | | | | | | | | | | | | |
| | Method of adding reducing agent | | | | | | | | | | | | | | |
| Polymer emulsion after emulsion polymerization | Amount of aggregates in polymer emulsion after emulsion polymerization | (wt%) | 0 | 0 | 0 | 0 | 0 | 0.6 | 0.1 | 0 | 0 | 2.1 | 2.1 | 0 | 20 |
| Compounding agent added to polymer emulsion before coagulation(*2) | Stearyl 3-(3,5-di-tert-butyl-4-hydroxyphenyl) propionate (antioxidant) | (parts) | 0.3 | 0.3 | 0.3 | 0.3 | 0.3 | 0.3 | 0.3 | 0.3 | 0.3 | 0.3 | 0.3 | 0.3 | - |
| | Polyethylene oxide | (parts) | 0.011 | 0.011 | 0.011 | 0.011 | 0.011 | 0.011 | 0.011 | 0.011 | 0.011 | 0.011 | 0.011 | 0.011 | - |
| | Polyoxyethylene stearyl ether phosphoric acid (lubricant) | (parts) | 0.075 | 0.075 | 0.075 | 0.075 | 0.075 | 0.075 | 0.075 | 0.075 | 0.075 | 0.075 | 0.075 | 0.075 | - |
| Coagulant used in coagulation step(t3) | Sodium sulfate | (parts) | 3.3 | 3.3 | 3.3 | 3.3 | | 3.3 | 3.3 | 3.3 | | 3.3 | 3.3 | 10 | - |
| | Magnesium sulfate | (parts) | | | | | 1.1 | | | | | | | | - |
| | Calcium chloride | (parts) | | | | | | | | | 1.1 | | | | - |

EP 3 533 807 B1

(continued)

| | | | Production Example | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Types of acrylic rubber | | | (A1) | (A2) | (A3) | (A4) | (A5) | (A6) | (A7) | (A8) | (A9) | (A10) | (A11) | (A12) | (A13) |
| Coagulation temperature in coagulation step | Coagulation temperature | (°C) | 85 | 85 | 85 | 85 | 85 | 85 | 85 | 85 | 85 | 85 | 85 | 85 | - |
| Washing with water | Amount of industrial water used relative to 100 parts of solid content in hydrous crumbs | (parts) | 388 | 388 | 388 | 388 | 388 | 388 | 388 | 388 | 388 | 388 | 388 | 388 | - |
| | The number of times of washing with water | (times) | 4 | 4 | 4 | 4 | 4 | 4 | 4 | 4 | 4 | 4 | 4 | 4 | - |
| Acid washing | Amount of industrial water used relative to 100 parts of solid content in hydrous crumbs | (parts) | 388 | 388 | 388 | 388 | 388 | 388 | 388 | 388 | 388 | 388 | 388 | 388 | - |
| | Amount of concentrated sulfuric acid used relative to 100 parts of solid content in hydrous crumbs | (parts) | 0.13 | 0.13 | 0.13 | 0.13 | 0.13 | 0.13 | 0.13 | 0.13 | 0.13 | 0.13 | 0.13 | 0.13 | - |
| | The number of times of acid washing | (times) | 1 | 1 | 1 | 1 | 1 | 1 | 1 | 1 | 1 | 1 | 1 | 1 | - |

EP 3 533 807 B1

(continued)

| | | Production Example | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Types of acrylic rubber | | (A1) | (A2) | (A3) | (A4) | (A5) | (A6) | (A7) | (A8) | (A9) | (A10) | (A11) | (A12) | (A13) |
| Washing with water after acid washing | Amount of pure water used relative to 100 parts of solid content in hydrous crumbs (parts) | 388 | 388 | 388 | 388 | 388 | 388 | 388 | 388 | 388 | 388 | 388 | 388 | - |
| | The number of times of washing with water (times) | 1 | 1 | 1 | 1 | 1 | 1 | 1 | 1 | 1 | 1 | 1 | 1 | - |
| Hydrous crumbs after washing | Mutual adhesion between hydrous crumbs after washing (fall time) (sec) | 30 | 12 | 9 | 39 | 26 | 38 | 36 | 44 | 20 | 315 | 360 | 427 | - |
| Drying condition | Drying temperature (°C) | 110 | 110 | 110 | 110 | 110 | 110 | 110 | 110 | 110 | 110 | 110 | 110 | - |
| | Drying time (hr) | 1 | 1 | 1 | 1 | 1 | 1 | 1 | 1 | 1 | 1 | 2.5 | 1 | - |
| Acrylic rubber after drying | Moisture content of acrylic rubber after drying (wt%) | 0 | 0 | 0 | 0 | 0 | 0 | 0 | 0 | 0 | 2.5 | 0 | 0 | - |

(*1) The amount of the compounding agent added for preparation of the monomer emulsion is represented as a compounding amount relative to 100 parts of the charged monomers.

(*2) The amount of the compounding agent added to the polymer emulsion before coagulation is represented as a compounding amount relative to 100 parts of the polymer emulsion.

(*3) The amount of the coagulant in the coagulation step is represented as a compounding amount relative to 100 parts of the liquid mixture of the antioxidant, polyethylene oxide, and/or the lubricant in the polymer emulsion.

[Table 2]

Table 2

| | | | Example | | | | | | | | | Comparative Example | | |
|---|---|---|---|---|---|---|---|---|---|---|---|---|---|---|---|
| | | | 1 | 2 | 3 | 4 | 5 | 6 | 7 | 8 | 9 | 1 | 2 | 3 |
| Types of acrylic rubber used | | | (A1) | (A2) | (A3) | (A4) | (A5) | (A6) | (A7) | (A8) | (A9) | (A10) | (A11) | (A12) |
| Monomer emulsion composition (*1) | Pure water | (parts) | 46,294 | 46,294 | 46,294 | 46,294 | 46,294 | 46,294 | 46,294 | 46,294 | 46,294 | 46,294 | 46,294 | 46,294 |
| | Ethyl acrylate | (parts) | 49,3 | 49,3 | 49,3 | 49,3 | 49,3 | 49,3 | 49,3 | 49,3 | 49,3 | 49,3 | 49,3 | 49,3 |
| | n-Butyl acrylate | (parts) | 49,3 | 49,3 | 49,3 | 49,3 | 49,3 | 49,3 | 49,3 | 49,3 | 49,3 | 49,3 | 49,3 | 49,3 |
| | Mono-n-butyl fumarate | (parts) | 1,4 | 1,4 | 1,4 | 1,4 | 1,4 | 1,4 | 1,4 | 1,4 | 1,4 | 1,4 | 1,4 | 1,4 |
| | Sodium lauryl sulfate (emulsifier) | (parts) | 0,567 | 0,567 | 0,567 | 0,567 | 0,567 | 0,567 | 0,567 | 0,8 | 0,567 | 0,567 | 0,567 | 1,701 |
| | Polyoxyethylene dodecyl ether (emulsifier) | (parts) | 1,4 | | | | 1,4 | 0,7 | 1,2 | 1,4 | 1,4 | | | |
| | Polyethylene oxide-polypropylene oxide glycol (emulsifier) | (parts) | | 1,4 | | | | | | | | | | |
| | Polyethyleneoxide monostearate (emulsifier) | (parts) | | | 1,4 | | | | | | | | | |
| | Polyethyleneoxide nonylphenol (emulsifier) | (parts) | | | | 1,4 | | | | | | | | |
| Polymer emulsion after emulsion polymerization | Amount of aggregates in polymer emulsion after emulsion polymerization | (wt%) | 0 | 0 | 0 | 0 | 0 | 0,6 | 0,1 | 0 | 0 | 2,1 | 2.1 | 0 |

(continued)

| | | | Example | | | | | | | | | Comparative Example | | |
|---|---|---|---|---|---|---|---|---|---|---|---|---|---|---|---|
| | | | 1 | 2 | 3 | 4 | 5 | 6 | 7 | 8 | 9 | 1 | 2 | 3 |
| Hydrous crumbs after washing | Mutual adhesion between hydrous crumbs after washing (fall time) | (sec) | 30 | 12 | 9 | 33 | 26 | 38 | 36 | 44 | 20 | 315 | 360 | 427 |
| Mooney scorch | Vm | | 60 | 61 | 60 | 63 | 65 | 62 | 57 | 63 | 56 | 60 | 53 | 62 |
| | t5 | (min) | 3,4 | 3,1 | 3,2 | 3,2 | 3,3 | 3,5 | 3,2 | 3,1 | 2,9 | 3,4 | 3,3 | 3,6 |
| | t35 | (min) | 5,2 | 5 | 5,4 | 5,6 | 6,6 | 5,4 | 5,3 | 5,1 | 5,7 | 5,4 | 5,7 | 6 |
| Mooney scorch after storage under highly humid condition | Vm | | 62 | 63 | 67 | 63 | 68 | 67 | 64 | 65 | 85 | 65 | 63 | 66 |
| | t5 | (min) | 4,1 | 4,4 | 3,8 | 3,9 | 3,8 | 3,6 | 4 | 4,1 | 3,9 | 3,7 | 4,2 | 4 |
| | t35 | (min) | 6 | 5,9 | 6 | 5,1 | 5,6 | 5,8 | 5,1 | 4,9 | 5,4 | 5,4 | 5,5 | 5,8 |
| Evaluation | Tensile strength | (MPa) | 10,5 | 10,3 | 10,3 | 10,1 | 10,1 | 10,2 | 10,3 | 10,5 | 10,4 | 10,4 | 10,2 | 10,4 |
| | Elongation | (%) | 220 | 210 | 220 | 200 | 190 | 220 | 200 | 200 | 220 | 170 | 200 | 220 |
| | Change ratio of volume during immersion in water (water resistance) | (%) | 17 | 17 | 17 | 17 | 15 | 16 | 16 | 17 | 15 | 17 | 17 | 33 |

As shown in Tables 1 and 2, aggregates in the resulting polymer emulsion were sufficiently reduced in the acrylic rubbers prepared in Production Examples 1 to 9 in which the monomers for forming the acrylic rubber are subjected to emulsion polymerization in the presence of the nonionic emulsifier and the anionic emulsifier. For this reason, fouling caused by such aggregates was not generated within the polymerization reaction tank. Moreover, the mutual adhesion between hydrous crumbs was prevented. Furthermore, cross-linked rubbers prepared using the acrylic rubbers prepared in Production Examples 1 to 9 had high water resistance (Production Examples 1 to 9 and Examples 1 to 9).

In contrast, in Production Examples 10 and 11 in which the nonionic emulsifier was not used, aggregates were generated in the resulting polymer emulsions, and thus fouling caused by adhesion of such aggregates was generated inside the polymerization reaction tank. Furthermore, the mutual adhesion between hydrous crumbs occurred, and the drying efficiency was also inferior (Production Examples 10 and 11, and Comparative Examples 1 and 2)

In Production Example 12 in which the nonionic emulsifier was not used and the amount of the anionic emulsifier used was increased, the mutual adhesion between hydrous crumbs occurred, although generation of aggregates in the polymer emulsion was prevented (Production Example 12 and Comparative Example 3).

Furthermore, in Production Example 13 in which the anionic emulsifier was not used, aggregates were remarkably generated in the resulting polymer emulsion, and thus fouling caused by adhesion of such aggregates was remarkably generated inside the polymerization reaction tank. Furthermore, the subsequent steps including the coagulation operation could not be performed due to such remarkable aggregates (Production Example 13).

**Claims**

1. A method for producing an acrylic rubber, comprising:

    an emulsion polymerization step of emulsion polymerizing monomers for forming the acrylic rubber in the presence of a nonionic emulsifier and an anionic emulsifier to prepare a polymer emulsion; and
    a coagulation step of coagulating the polymer emulsion through addition of a coagulant to the polymer emulsion to yield hydrous crumbs, wherein
    the emulsion polymerization reaction is performed while a monomer emulsion prepared by mixing the monomers for forming the acrylic rubber with the nonionic emulsifier, the anionic emulsifier and water is being continuously added dropwise to the polymerization reaction system from the start of polymerization reaction to any time, and the amount of water to be used in the monomer emulsion is 10 to 70 parts by weight relative to 100 parts by weight of the monomers for forming the acrylic rubber.

2. The method for producing an acrylic rubber according to claim 1, wherein the nonionic emulsifier is a polyoxyethylene alkyl ether.

3. The method for producing an acrylic rubber according to claim 1, wherein the nonionic emulsifier is a polyethylene oxide polypropylene oxide copolymer.

4. The method for producing an acrylic rubber according to any one of claims 1 to 3, wherein the anionic emulsifier is a higher alcohol sulfate salt.

5. The method for producing an acrylic rubber according to claim 4, wherein the anionic emulsifier is sodium lauryl sulfate.

6. The method for producing an acrylic rubber according to any one of claims 1 to 5, wherein an amount of the nonionic emulsifier to be used is more than 0 parts by weight and 4 parts by weight or less relative to 100 parts by weight of the monomers for forming the acrylic rubber.

7. The method for producing an acrylic rubber according to claim 6, wherein the amount of the nonionic emulsifier to be used is 0.7 to 1.7 parts by weight relative to 100 parts by weight of the monomers for forming the acrylic rubber.

8. The method for producing an acrylic rubber according to any one of claims 1 to 7, wherein an amount of the anionic emulsifier to be used is more than 0 parts by weight and 4 parts by weight or less relative to 100 parts by weight of the monomers for forming the acrylic rubber.

9. The method for producing an acrylic rubber according to claim 8, wherein the amount of the anionic emulsifier to be used is 0.35 to 0.75 parts by weight relative to 100 parts by weight of the monomers for forming the acrylic rubber.

**10.** The method for producing an acrylic rubber according to any one of claims 1 to 9, wherein the amount of the nonionic emulsifier to be used and the amount of the anionic emulsifier to be used are controlled such that a weight ratio of nonionic emulsifier/anionic emulsifier is 10/90 to 80/20.

**11.** The method for producing an acrylic rubber according to claim 10, wherein the amount of the nonionic emulsifier to be used and the amount of the anionic emulsifier to be used are controlled such that the weight ratio of nonionic emulsifier/anionic emulsifier is 50/50 to 75/25.

**12.** The method for producing an acrylic rubber according to any one of claims 1 to 11, wherein the coagulant is magnesium sulfate or sodium sulfate.

**13.** The method for producing an acrylic rubber according to any one of claims 1 to 12, wherein the coagulation temperature in the coagulation step is 78 to 90°C.

**14.** The method for producing an acrylic rubber according to any one of claims 1 to 13, wherein the emulsion polymerization reaction is performed in the emulsion polymerization step while the monomer emulsion, a polymerization initiator, and a reducing agent are being continuously added dropwise to a polymerization reaction system from a start of the polymerization reaction to any time.

**15.** A method for producing an acrylic rubber composition, comprising a step of compounding a cross-linking agent with the acrylic rubber prepared by the production method according to any one of claims 1 to 14.

**16.** A method for producing a cross-linked rubber, comprising a step of cross-linking the acrylic rubber composition prepared by the production method according to claim 15.


**Patentansprüche**

**1.** Verfahren zur Herstellung eines Acrylkautschuks, umfassend:

einen Emulsionspolymerisationsschritt des Emulsionspolymerisierens von Monomeren zur Bildung des Acrylkautschuks in Gegenwart eines nichtionischen Emulgators und eines anionischen Emulgators zur Herstellung einer Polymeremulsion; und
einen Koagulationsschritt des Koagulierens der Polymeremulsion durch Zugabe eines Koagulationsmittels zur Polymeremulsion, um wasserhaltige Krümel zu erhalten, wobei
die Emulsionspolymerisationsreaktion durchgeführt wird, während eine Monomeremulsion, die durch Mischen der Monomere zur Bildung des Acrylkautschuks mit dem nichtionischen Emulgator, dem anionischen Emulgator und Wasser hergestellt wird, kontinuierlich tropfenweise zu dem Polymerisationsreaktionssystem von Beginn der Polymerisationsreaktion bis zu einem beliebigen Zeitpunkt zugegeben wird, und
die Menge des in der Monomeremulsion zu verwendenden Wassers 10 bis 70 Gewichtsanteile, bezogen auf 100 Gewichtsanteile der Monomere zur Bildung des Acrylkautschuks, beträgt.

**2.** Verfahren zur Herstellung eines Acrylkautschuks nach Anspruch 1, wobei der nichtionische Emulgator ein Polyoxyethylenalkylether ist.

**3.** Verfahren zur Herstellung eines Acrylkautschuks nach Anspruch 1, wobei der nichtionische Emulgator ein Polyethylenoxid-Polypropylenoxid-Copolymer ist.

**4.** Verfahren zur Herstellung eines Acrylkautschuks nach einem der Ansprüche 1 bis 3, wobei der anionische Emulgator ein Sulfatsalz eines höheren Alkohols ist.

**5.** Verfahren zur Herstellung eines Acrylkautschuks nach Anspruch 4, wobei der anionische Emulgator Natriumlaurylsulfat ist.

**6.** Verfahren zur Herstellung eines Acrylkautschuks nach einem der Ansprüche 1 bis 5, wobei die Menge des zu verwendenden nichtionischen Emulgators mehr als 0 Gewichtsanteile und
4 Gewichtsanteile oder weniger, bezogen auf 100 Gewichtsanteile der Monomere zur Bildung des Acrylkautschuks, beträgt.

**7.** Verfahren zur Herstellung eines Acrylkautschuks nach Anspruch 6, wobei die Menge des zu verwendenden nichtionischen Emulgators 0,7 bis 1,7 Gewichtsanteile, bezogen auf 100 Gewichtsanteile der Monomere zur Bildung des Acrylkautschuks, beträgt.

**8.** Verfahren zur Herstellung eines Acrylkautschuks nach einem der Ansprüche 1 bis 7, wobei die Menge des zu verwendenden anionischen Emulgators mehr als 0 Gewichtsanteile und 4 Gewichtsanteile oder weniger, bezogen auf 100 Gewichtsteile der Monomere zur Bildung des Acrylkautschuks, beträgt.

**9.** Verfahren zur Herstellung eines Acrylkautschuks nach Anspruch 8, wobei die Menge des zu verwendenden anionischen Emulgators 0,35 bis 0,75 Gewichtsanteile, bezogen auf 100 Gewichtsanteile der Monomere zur Bildung des Acrylkautschuks, beträgt.

**10.** Verfahren zur Herstellung eines Acrylkautschuks nach einem der Ansprüche 1 bis 9, wobei die Menge des zu verwendenden nichtionischen Emulgators und die Menge des zu verwendenden anionischen Emulgators so gesteuert werden, dass das Gewichtsverhältnis von nichtionischem Emulgator/anionischem Emulgator 10/90 bis 80/20 beträgt.

**11.** Verfahren zur Herstellung eines Acrylkautschuks nach Anspruch 10, wobei die Menge des zu verwendenden nichtionischen Emulgators und die Menge des zu verwendenden anionischen Emulgators so gesteuert werden, dass das Gewichtsverhältnis von nichtionischem Emulgator/anionischem Emulgator 50/50 bis 75/25 beträgt.

**12.** Verfahren zur Herstellung eines Acrylkautschuks nach einem der Ansprüche 1 bis 11, wobei das Koagulationsmittel Magnesiumsulfat oder Natriumsulfat ist.

**13.** Verfahren zur Herstellung eines Acrylkautschuks nach einem der Ansprüche 1 bis 12, wobei die Koagulationstemperatur im Koagulationsschritt 78 bis 90°C beträgt.

**14.** Verfahren zur Herstellung eines Acrylkautschuks nach einem der Ansprüche 1 bis 13, wobei die Emulsionspolymerisationsreaktion im Emulsionspolymerisationsschritt durchgeführt wird, während die Monomeremulsion, ein Polymerisationsinitiator und ein Reduktionsmittel kontinuierlich tropfenweise zu einem Polymerisationsreaktionssystem von Beginn der Polymerisationsreaktion bis zu einem beliebigen Zeitpunkt zugegeben werden.

**15.** Verfahren zur Herstellung einer Acrylkautschukzusammensetzung, umfassend einen Schritt des Vermischens eines Vernetzungsmittels mit dem mittels des Herstellungsverfahrens nach einem der Ansprüche 1 bis 14 hergestellten Acrylkautschuk.

**16.** Verfahren zur Herstellung eines vernetzten Kautschuks, umfassend einen Schritt des Vernetzens der mittels des Herstellungsverfahrens gemäß Anspruch 15 hergestellten Acrylkautschukzusammensetzung.

**Revendications**

**1.** Procédé pour produire un caoutchouc acrylique, comprenant :

une étape de polymérisation en émulsion de polymérisation en émulsion des monomères pour former le caoutchouc acrylique en présence d'un émulsionnant non-ionique et d'un émulsionnant anionique pour préparer une émulsion de polymère ; et
une étape de coagulation de coagulation de l'émulsion de polymère par addition d'un coagulant à l'émulsion de polymère pour engendrer des granules hydratés,
dans lequel
la réaction de polymérisation en émulsion est réalisée pendant une émulsion de monomères préparée par mélange des monomères pour former le caoutchouc acrylique avec l'émulsionnant non-ionique, l'émulsionnant anionique et l'eau étant ajoutée en continu goutte à goutte au système de réaction de polymérisation depuis le début de la réaction de polymérisation jusqu'à un moment quelconque, et
la quantité d'eau à utiliser dans l'émulsion de monomères est de 10 à 70 parties en poids pour 100 parties en poids des monomères pour former le caoutchouc acrylique.

2. Procédé pour produire un caoutchouc acrylique selon la revendication 1, dans lequel l'émulsionnant non-ionique est un alkyléther polyoxyéthyléné.

3. Procédé pour produire un caoutchouc acrylique selon la revendication 1, dans lequel l'émulsionnant non-ionique est un copolymère de poly(oxyde d'éthylène) et de poly(oxyde de propylène).

4. Procédé pour produire un caoutchouc acrylique selon l'une quelconque des revendications 1 à 3, dans lequel l'émulsionnant anionique est un sel de sulfate d'alcool supérieur.

5. Procédé pour produire un caoutchouc acrylique selon la revendication 4, dans lequel l'émulsionnant anionique est le laurylsulfate de sodium.

6. Procédé pour produire un caoutchouc acrylique selon l'une quelconque des revendications 1 à 5, dans lequel la quantité de l'émulsionnant non-ionique à utiliser est supérieure à 0 partie en poids et de 4 parties en poids ou moins pour 100 parties en poids des monomères pour former le caoutchouc acrylique.

7. Procédé pour produire un caoutchouc acrylique selon la revendication 6, dans lequel la quantité de l'émulsionnant non-ionique à utiliser est de 0,7 à 1,7 parties en poids pour 100 parties en poids des monomères pour former le caoutchouc acrylique.

8. Procédé pour produire un caoutchouc acrylique selon l'une quelconque des revendications 1 à 7, dans lequel la quantité de l'émulsionnant anionique à utiliser est supérieure à 0 partie en poids et de 4 parties en poids ou moins pour 100 parties en poids des monomères pour former le caoutchouc acrylique.

9. Procédé pour produire un caoutchouc acrylique selon la revendication 8, dans lequel la quantité de l'émulsionnant anionique à utiliser est de 0,35 à 0,75 partie en poids pour 100 parties en poids des monomères pour former le caoutchouc acrylique.

10. Procédé pour produire un caoutchouc acrylique selon l'une quelconque des revendications 1 à 9, dans lequel la quantité de l'émulsionnant non-ionique à utiliser et la quantité de l'émulsionnant anionique à utiliser sont contrôlées de façon que le rapport en poids émulsionnant non-ionique/émulsionnant anionique soit de 10/90 à 80/20.

11. Procédé pour produire un caoutchouc acrylique selon la revendication 10, dans lequel la quantité de l'émulsionnant non-ionique à utiliser et la quantité de l'émulsionnant anionique à utiliser sont contrôlées de façon que le rapport en poids émulsionnant non-ionique/émulsionnant anionique soit de 50/50 à 75/25.

12. Procédé pour produire un caoutchouc acrylique selon l'une quelconque des revendications 1 à 11, dans lequel le coagulant est le sulfate de magnésium ou le sulfate de sodium.

13. Procédé pour produire un caoutchouc acrylique selon l'une quelconque des revendications 1 à 12, dans lequel la température de coagulation dans l'étape de coagulation est de 78 à 90°C.

14. Procédé pour produire un caoutchouc acrylique selon l'une quelconque des revendications 1 à 13, dans lequel la réaction de polymérisation en émulsion est effectuée dans l'étape de polymérisation en émulsion pendant l'émulsion de monomères, un amorceur de polymérisation, et un agent réducteur étant ajoutés en continu goutte à goutte à un système de réaction de polymérisation depuis le début de la réaction de polymérisation jusqu'à un moment quelconque.

15. Procédé pour produire une composition de caoutchouc acrylique, comprenant une étape de combinaison d'un agent de réticulation avec le caoutchouc acrylique préparé par le procédé de production selon l'une quelconque des revendications 1 à 14.

16. Procédé pour produire un caoutchouc réticulé, comprenant une étape de réticulation de la composition de caoutchouc acrylique préparée par le procédé de production selon la revendication 15.

# EP 3 533 807 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07145291 A
- JP H02212574 A
- JP 2010126576 A
- KR 100623009 B

**Non-patent literature cited in the description**

- **T. TAKAOKA.** Synthetic rubber and the production method thereof (11th). *J. of SRIJ,* 1972, vol. 45 (9), 817-820
- **H. TATEMICHI.** Recent trends of acrylic rubber. *Macromolecules,* 1960, vol. 9 (9), 774-777